# EUROPÄISCHE PATENTSCHRIFT

(11) **EP 1 717 240 B1**
(45) Veröffentlichungstag und Bekanntmachung des Hinweises auf die Patenterteilung: **22.09.2010**
(21) Anmeldenummer: 05103562.4
(22) Anmeldetag: 29.04.2005
(51) Int. Cl.: C07F 7/02

(54) **Organoalkoxysilane zur Verwendung in feuchtigkeitshärtenden Zusammensetzungen**
Organoalkoxysilanes for use in moisture curable compositions
Organoalkoxysilanes pour l'usage dans des compositions durcissables à l'humidité

(43) Veröffentlichungstag der Anmeldung: 02.11.2006
(73) Patentinhaber: Sika Technology AG, 6340 Baar (CH)
(72) Erfinder: Bütikofer, Pierre-André, 8304, Wallisellen (CH); Jucker, Barbara, 8057, Zürich (CH); Burckhardt, Urs, 8057, Zürich (CH); Pfenninger, Ueli, 8804, Au (CH)
(74) Vertreter: Sika Patent Attorneys

(56) Entgegenhaltungen:
- EP-A- 0 994 117
- EP-A- 1 156 053
- WO-A-95/06650
- ROESLER: "Thermal Stability of N-2-Suiccinylaminoalkyl Trialkoxysilane Based Urea" POLYMERIC MATERIALS: SCIENCE & ENGINEERING, Bd. 91, 2004, Seiten 1015-1016, XP009056025
- SHELUDYAKOV ET AL.: "Synthesis and properties of novel dialkylaminocarbenium salts" RUSSIAN CHEMICAL BULLETIN, Bd. 46, Nr. 5, 1997, Seiten 997-1002, XP009056042
- PATENT ABSTRACTS OF JAPAN Bd. 012, Nr. 178 (P-708), 26. Mai 1988 (1988-05-26) & JP 62 288849 A (TORAY IND INC), 15. Dezember 1987 (1987-12-15)

## Beschreibung

### Technisches Gebiet

Die Erfindung betrifft feuchtigkeitshärtende Zusammensetzungen enthaltend mindestens ein Organoalkoxysilan und mindestens ein silanfunktionelles Polymer, insbesondere geeignet als Klebstoff, Dichtmasse oder Beschichtung mit guten mechanischen Eigenschaften.

### Stand der Technik

Organoalkoxysilane sind bekannt, unter anderem als Zusätze für Zusammensetzungen, beispielsweise als Haftvermittler, beschrieben beispielsweise in "Handbook of Coatings Additives", ed. L. J. Calbo, M. Dekker Inc. 1987, Kapitel 10, Seite 281-294.

In US 5,384,342 und US 6,441,213 werden Organoalkoxysilane enthaltend eine Harnstoff- oder Thioharnstoffgruppe beschrieben, welche sich beispielsweise als Haftvermittler in Polymeren, welche polymerisierbare Doppelbindungen enthalten, eignen. Diese Organoalkoxysilane enthalten eine reaktive organische Gruppierung mit mindestens einer aktivierten Doppelbindung.

Zusammensetzungen auf der Basis von silan- und/oder isocyanatfunktionellen Polymeren sind bekannt und werden unter anderem als feuchtigkeitshärtende Klebstoffe, Dichtmassen und Beschichtungen eingesetzt. Für die meisten dieser Anwendungen, beispielsweise Fugendichtmassen oder Montageklebstoffe, ist es entscheidend, dass die Zusammensetzung im ausgehärteten Zustand über Haftungseigenschaften sowie gute mechanische Eigenschaften verfügt, wobei eine hohe Dehnbarkeit bei gleichzeitig hoher Reissfestigkeit besonders wichtig sind. Diesen Anforderungen genügen solche Zusammensetzungen, insbesondere jene auf Basis silanfunktioneller Polymere, oft nicht.

EP 0 994 117 A1 offenbart Silanfunktionelle Polymere, welche aus einem Polyol und einem Aminosilan/Polyisocyanat-Addukt hergestellt werden.

Die Verwendung von Organoalkoxysilanen in feuchtigkeitshärtenden Zusammensetzungen auf der Basis von silan- und/oder isocyanatfunktionellen Polymeren ist bekannt. Sie werden üblicherweise eingesetzt, um Eigenschaften wie Haftung, Lagerstabilität und Reaktivität gezielt zu beeinflussen, wie beispielsweise beschrieben in US 3,979,344, US 5,147,927, US 6,703,453 und EP 0 819 749 A2. Die bei den mechanischen Eigenschaften, insbesondere der Dehnbarkeit und Reissfestigkeit, erzielten Verbesserungen sind in den Systemen nach dem Stand der Technik jedoch meistens bescheiden und reichen für viele Anwendungen nicht aus.

### Darstellung der Erfindung

Die Erfindung betrifft feuchtigkeitshärtende Zusammensetzungen gemäss Anspruch 1, deren Verwendung gemäss Anspruch 14, sowie verklebte bzw. abgedichtete Artikel gemäss Anspruch 16 bzw. 18.

Die Organoalkoxysilane enthalten als wesentliches Merkmal eine Harnstoff- oder Thioharnstoff- oder Carbamat- oder Thiocarbamatgruppe. Als weiteres wesentliches Merkmal enthalten sie ausser den Silangruppen keine weiteren Gruppen, welche Polymerisierungsreaktionen eingehen. Die Organoalkoxysilane lassen sich aus der Umsetzung von geeigneten Aminosilanen, Mercaptosilanen oder Hydroxysilanen mit Monoisocyanaten oder Monoisothiocyanaten erhalten.

Ueberraschenderweise wurde gefunden, dass feuchtigkeitshärtende Zusammensetzungen nach Anspruch 1 im ausgehärteten Zustand eine hohe Dehnbarkeit bei gleichzeitig hoher Reissfestigkeit aufweisen und damit insbesondere zur Verwendung als Klebstoffe, Dichtmassen oder Beschichtungen geeignet sind.

### Wege zur Ausführung der Erfindung

Die vorliegende Erfindung betrifft eine feuchtigkeitshärtende Zusammensetzung enthaltend mindestens ein Organoalkoxysilan der Formel (I) und mindestens ein silanfunktionelles Polymer P. 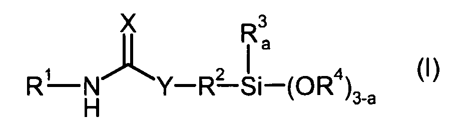 wobei
R¹ für eine Alkyl-, Cycloalkyl-, Aryl- oder Arylalkylgruppe steht und welche weder mit Wasser oder Silan reaktive Gruppen noch Aminogruppen noch polymerisierbare Doppelbindungen enthält,
R² für eine lineare oder verzweigte Alkylengruppe mit 1 bis 20 C-Atomen steht,
R³ für eine Alkylgruppe mit 1 bis 8 C-Atomen, bevorzugt für eine Methyl- oder für eine Ethylgruppe, insbesondere eine Methylgruppe, steht,
R⁴ für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
a für 0, 1 oder 2, bevorzugt für 0 oder 1, steht,
X für O oder S steht, und
Y für O, S oder N-R⁵ steht,
wobei
   R⁵ für einen linearen oder verzweigten Kohlenwasserstoffrest mit 1 bis 20 C-Atomen steht, bevorzugt für Methyl oder Ethyl oder Butyl oder Cyclohexyl oder Phenyl oder einen Rest der Formel (III) steht, 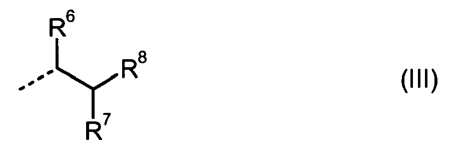
wobei R⁶ und R⁷, unabhängig voneinander, für ein Wasserstoffatom oder für einen Rest aus der Gruppe umfassend R⁹, -COOR⁹ und -CN steht; und
R⁸ für ein Wasserstoffatom oder für einen Rest aus der Gruppe umfassend -CH₂-COOR⁹, -COOR⁹, -CN, -NO₂, -PO(OR⁹)₂, -SO₂R⁹ und -SO₂OR⁹ steht;
   wobei R⁹ für einen, gegebenenfalls mindestens ein Heteroatom enthaltenden, Kohlenwasserstoffrest mit 1 bis 20 C-Atomen steht.

Die gestrichelte Linie in Formel (III) stellt die Verbindung mit dem Stickstoffatom dar.

Die Organoalkoxysilane der Formel (I) enthalten eine Harnstoff- oder Thioharnstoff- oder Carbamat- oder Thiocarbamatgruppe

Die Erfindung betrifft feuchtigkeitshärtende Zusammensetzungen enthaltend mindestens ein silanfunktionelles Polymer und mindestens ein Silan der Formel (I), geeignet insbesondere als Klebstoffe, Dichtmassen oder Beschichtungen mit guten mechanischen Eigenschaften, insbesondere hoher Dehnbarkeit.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyhamstoffe, Polyharnstoffe, Polyester-Polyharnstoffe, Polyisocyanurate, Polycarbodiimide, usw.

Mit dem Begriff "Organoalkoxysilan" oder kurz "Silan" werden im vorliegenden Dokument Verbindungen bezeichnet, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen. Entsprechend dazu bezeichnet der Begriff "Silangruppe" die an den organischen Rest des Organoalkoxysilans gebundene Silicium-haltige Gruppe. Die Organoalkoxysilane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen).

Mit Begriffen wie "Aminosilan", "Isocyanatosilan" und "Mercaptosilan" werden Silane bezeichnet, welche die entsprechende funktionelle Gruppe aufweisen, hier also ein Aminoalkylalkoxysilan, Isocyanatoalkylalkoxysilan und Mercaptoalkylalkoxysilan.

Mit dem Begriff "silanfunktionell" werden Verbindungen, insbesondere Polymere, bezeichnet, welche Silangruppen aufweisen.

Bevorzugte Organoalkoxysilane der Formel (I), im weiteren Text "Silane (I)" genannt, enthalten eine Harnstoff- oder eine Thioharnstoffgruppe und weisen die Formel (II) auf, 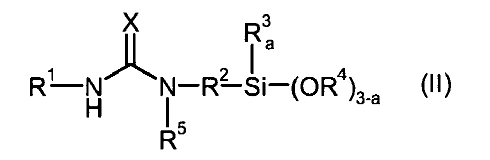
wobei R¹, R², R³, R⁴, R⁵, X und a die für Formel (I) genannten Bedeutungen aufweisen, und wobei R⁵ bevorzugt für Methyl oder Ethyl oder Butyl oder Cyclohexyl oder Phenyl oder einen Rest der Formel (III) steht, 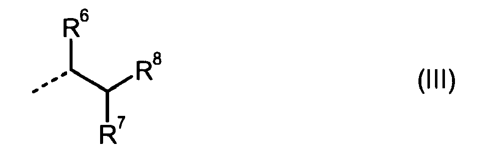
wobei R⁶ und R⁷, unabhängig voneinander, für ein Wasserstoffatom oder für einen Rest aus der Gruppe umfassend R⁹, -COOR⁹ und -CN steht; und
R⁸ für ein Wasserstoffatom oder für einen Rest aus der Gruppe umfassend -CH₂-COOR⁹, -COOR⁹, -CN, -NO₂, -PO(OR⁹)₂, -SO₂R⁹ und -SO₂OR⁹ steht;
   wobei R⁹ für einen, gegebenenfalls mindestens ein Heteroatom enthaltenden, Kohlenwasserstoffrest mit 1 bis 20 C-Atomen steht.

Die gestrichelte Linie in Formel (III) stellt die Verbindung mit dem Stickstoffatom dar.

In einer bevorzugten Ausführungsform sind die Substituenten der Formel (III) wie folgt ausgewählt: R⁶ steht für -COOR⁹, R⁷ für H, R⁸ für -COOR⁹ und R⁹ für eine, gegebenenfalls verzweigte, Alkylgruppe mit 1 bis 8 C-Atomen.

Besonders bevorzugte Silane (I) weisen die Formel (IV) auf: 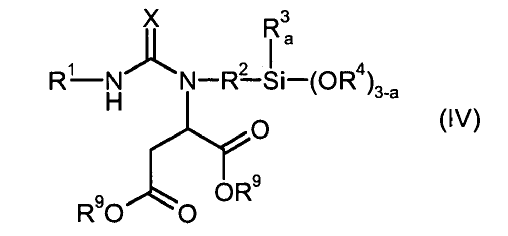
wobei R¹ für Ethyl, Butyl, Cyclohexyl oder Phenyl steht;
R² für Methylen, Propylen, Butylen, Methylpropylen oder Dimethylbutylen steht; und
R⁹ für Methyl, Ethyl oder Butyl steht und wobei X, R³, R⁴ und a die für Formel (I) bereits besprochenen Bedeutungen haben.

Die Silane (I) sind beispielsweise erhältlich durch die Umsetzung von Silanen der Formel (V) mit Monoisocyanaten oder Monoisothiocyanaten der Formel (VI)

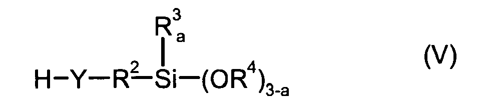

R¹-N=C=X (VI)

wobei die Substituenten R¹, R², R³, R⁴, X, Y und a die bereits genannten Bedeutungen haben.

Die Umsetzung erfolgt unter Ausschluss von Feuchtigkeit, beispielsweise bei Temperaturen zwischen 20 °C und 100 °C, wobei gegebenenfalls ein geeigneter Katalysator zugesetzt wird.

Für diese Umsetzung geeignete Silane der Formel (V) sind
- Mercaptosilane, wie 3-Mercaptopropyl-trimethoxysilan, 3-Mercaptopropyl-dimethoxymethylsilan sowie deren Analoga mit Ethoxy- oder Isopropoxygruppen anstelle der Methoxygruppen am Silicium;
- Hydroxysilane, wie 3-Hydroxypropyl-trimethoxysilan, 3-Hydroxypropyl-dimethoxymethylsilan sowie deren Analoga mit Ethoxy- oder Isopropoxygruppen anstelle der Methoxygruppen am Silicium;
- Aminosilane der Formel (VII) mit einer sekundären Aminogruppe, 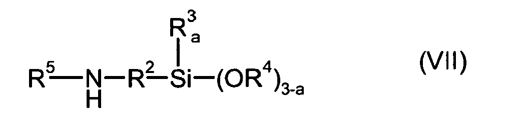
wobei R², R³, R⁴, R⁵ und a die bereits beschriebenen Bedeutungen aufweisen.

Geeignete Aminosilane der Formel (VII) leiten sich von handelsüblichen Aminosilanen mit einer primären Aminogruppe, im folgenden "primäre Aminosilane" genannt, ab, wie beispielsweise 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan, sowie deren Analoga mit Ethoxy- oder Isopropoxygruppen anstelle der Methoxygruppen am Silicium. Geeignete Aminosilane der Formel (VII) sind beispielsweise die Derivate der beispielhaft erwähnten primären Aminosilane, welche am Stickstoffatom einen Kohlenwasserstoffrest, beispielsweise eine Methyl-, Ethyl-, Butyl-, Cyclohexyl- oder Phenylgruppe, tragen; mehrfach silanfunktionelle sekundäre Aminosilane wie beispielsweise Bis(trimethoxysilylpropyl)amin; sowie die Produkte aus der Michael-artigen Addition der beispielhaft erwähnten primären Aminosilane an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd.

Besonders geeignete Aminosilane der Formel (VII) sind N-Methyl-3-aminopropyl-trimethoxysilan, N-Methyl-3-aminopropyl-dimethoxymethylsilan, N-Ethyl-3-amino-2-methylpropyl-trimethoxysilan, N-Ethyl-3-amino-2-methylpropyl-dimethoxymethylsilan, N-Butyl-3-aminopropyl-trimethoxysilan, N-Butyl-3-aminopropyl-dimethoxymethylsilan, N-Butyl-4-amino-3,3-dimethylbutyl-trimethoxysilan, N-Butyl-4-amino-3,3-dimethylbutyl-dimethoxymethylsilan, N-Cyclohexyl-3-aminopropyl-trimethoxysilan, N-Cyclohexyl-3-aminopropyl-dimethoxymethylsilan, N-Phenyl-3-aminopropyl-trimethoxysilan, N-Cyclohexyl-aminomethyl-trimethoxysilan, N-Phenyl-aminomethyl-trimethoxysilan, N-Phenyl-aminomethyl-dimethoxymethylsilan, die Produkte aus der Michael-artigen Addition von 3-Aminopropyl-trimethoxysilan, 3-Aminopropyl-dimethoxymethylsilan, 4-Amino-3,3-dimethylbutyl-trimethoxysilan, 4-Amino-3,3-dimethylbutyl-dimethoxymethylsilan, Aminomethyl-trimethoxysilan oder Aminomethyl-dimethoxymethylsilan an Maleinsäuredimethyl-, -diethyl- oder -dibutylester, Acrylsäuretetrahydrofurfuryl-, -isobornyl-, -hexyl-, -lauryl-, -stearyl-, 2-hydroxyethyl- oder 3-hydroxypropylester, Phosphonsäuredimethyl-, -diethyl- oder -dibutylester, Acrylnitril, 2-Pentennitril, Fumaronitril oder β-Nitrostyrol, sowie die Analoga der genannten Aminosilane mit Ethoxy- anstelle der Methoxygruppen am Silicium.

Geeignete Monoisocyanate nach Formel (VI) sind beispielsweise Methylisocyanat, Ethylisocyanat, n-Butylisocyanat, n-Hexylisocyanat, Cyclohexylisocyanat, Phenylisocyanat sowie weitere handelsübliche Monoisocyanate, sowie die Produkte aus der Reaktion von Diisocyanaten wie beispielsweise 2,4-Toluylendiisocyanat mit Monoalkoholen wie beispielsweise Alkylalkoholen, umgesetzt im molaren Verhältnis 1 zu 1.

Geeignete Monoisothiocyanate nach Formel (VI) sind beispielsweise Methylisothiocyanat, Ethylisothiocyanat, n-Butylisothiocyanat, n-Hexylisothiocyanat, Cyclohexylisothiocyanat, Phenylisothiocyanat und weitere handelsübliche Monoisothiocyanate.

Die Silane (I) sind unter Ausschluss von Wasser lagerstabil. Bei Kontakt mit Feuchtigkeit werden die Alkoxygruppen hydrolysiert. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen).

Die Silane der Formel (I) weisen zwei wichtige strukturelle Merkmale auf. Zum einen enthalten sie eine Carbamat- oder Thiocarbamatgruppe oder eine trisubstituierte Harnstoff- oder Thioharnstoffgruppe, was dazu führt, dass die Silane (I) auch bei niedrigem Molekulargewicht einen relativ tiefen Dampfdruck haben. Trotzdem führt die Anwesenheit dieser Gruppen - im Gegensatz etwa zu disubstituierten Harnstoffgruppen - nicht zu hoher Viskosität oder hohen Schmelzpunkten. Zum anderen enthalten die Silane (I) ausser den Silangruppen keine weiteren Gruppen, welche Polymerisierungsreaktionen eingehen, wie beispielsweise aktivierte C=C-Doppelbindungen. Dies unterscheidet sie grundlegend von den in US 5,384,342 und US 6,441,213 erwähnten Silanen.

Aufgrund ihrer Eigenschaften sind die Silane (I) geeignet als Zusätze für eine breite Palette von Zusammensetzungen, insbesondere von Polymere enthaltenden Zusammensetzungen. Beispielsweise lassen sie sich als Haftvermittler, Trocknungsmittel, Vernetzer oder Reaktivverdünner in Zusammensetzungen wie Primern, Anstrichen, Lacken, Klebstoffen, Dichtmassen und Bodenbelägen einsetzen. Sie können auch für Sol-Gel-Verfahren eingesetzt werden.

Besonders geeignet sind die Silane (I) als Zusätze für feuchtigkeitshärtenden Zusammensetzungen auf der Basis von silan- und/oder isocyanatfunktionellen Polymeren.

Insbesondere geeignet sind die Silane (I) als Zusätze für feuchtigkeitshärtenden Zusammensetzungen auf der Basis von silanfunktionellen Polymeren, wo sie signifikante Verbesserungen in den mechanischen Eigenschaften, zum Beispiel eine Erhöhung der Dehnbarkeit, bewirken können.

Ein Gegenstand der vorliegenden Erfindung ist eine feuchtigkeitshärtende Zusammensetzung enthaltend mindestens ein Silan der Formel (I) und mindestens ein silanfunktionelles Polymer **P**. Diese Zusammensetzungen sind besonders geeignet als Klebstoff, Dichtmasse oder Beschichtung mit guten mechanischen Eigenschaften. Das Silan (I) liegt in der Zusammensetzung typischerweise in einer Menge von 0.5 - 40 Gewichts-%, bevorzugt 2 - 30 Gewichts-%, besonders bevorzugt 4 - 20 Gewichts-%, bezogen auf das Polymer, vor.

Das silanfunktionelle Polymer **P** kann folgende Polymere darstellen:
(iii) ein silanfunktionelles Polyurethanpolymer **P3,** oder
(iv) ein silanfunktionelles Polymer **P4,** oder
(v) ein silanfunktionelles Polymer **P5,**
oder eine Mischung aus diesen genannten Polymeren.

Ein isocyanatfunktionelles Polyurethanpolymer **P1,** ist erhältlich ist durch die Umsetzung von mindestens einem Polyisocyanat mit mindestens einem Polyol.

Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Als Polyole für die Herstellung des isocyanatfunktionellen Polyurethanpolymers **P1** können beispielsweise die folgenden handelsüblichen Polyole, oder beliebige Mischungen davon, eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Der Begriff "Molekulargewicht" bezeichnet im vorliegenden Dokument das Molekulargewichtsmittel Mₙ.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Styrol-Acrylnitril-gepfropfte Polyetherpolyole, wie sie beispielsweise von Bayer unter dem Namen Lupranol geliefert werden.
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polyhydroxyterminierte Polybutadienpolyole, wie beispielsweise solche, die durch Polymerisation von 1,3-Butadien und Allylalkohol hergestellt werden.
- Polyhydroxyterminierte Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Hanse Chemie) hergestellt werden können.

Diese genannten Polyole weisen ein mittleres Molekulargewicht von 250 - 30'000 g/mol, insbesondere von 1'000 - 30'000 g/mol, und eine mittlere OH-Funktionalität im Bereich von 1.6 bis 3 auf.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanpolymers mitverwendet werden.

Als Polyisocyanate für die Herstellung des isocyanatfunktionellen Polyurethanpolymers **P1** können beispielsweise die folgenden handelsüblichen Polyisocyanate verwendet werden:
2,4- und 2,6-Toluylendiisocyanat (TDI) und beliebige Gemische dieser Isomeren, 4,4'-, 2,4'- und 2,2'-Diphenylmethandiisocyanat (MDI) und beliebige Gemische dieser und weiterer Isomeren, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendüsocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3- und 1,4-Tetramethylxylylendiisocyanat (TMXDI), 1,3-und 1,4-Bis-(isocyanatomethyl)-cyclohexan, Oligomere und Polymere der vorgenannten Isocyanate, sowie beliebige Mischungen der vorgenannten Isocyanate. Bevorzugt sind MDI, TDI, HDI und IPDI.

In einer Ausführungsform ist das Polymer **P** ein silanfunktionelles Polyurethanpolymer **P3**, welches erhältlich ist durch die Umsetzung eines isocyanatfunktionellen Polyurethanpolymers mit einem Silan, welches eine NCO-reaktive Gruppe aufweist, wobei das Silan in Bezug auf die Isocyanatgruppen des Polyurethanpolymers stöchiometrisch oder leicht überstöchiometrisch eingesetzt wird.

Als Silane, welche eine NCO-reaktive Gruppe aufweisen, zur Herstellung der Polymere **P3** geeignet sind Silane der Formel (V), wobei Aminosilane bevorzugt sind. Besonders bevorzugt sind Aminosilane der Formel (VII). Dieselben Aminosilane, welche als geeignet oder besonders geeignet zur Herstellung eines Harnstoff- oder Thioharnstoffgruppen enthaltenden Silans der Formel (II) genannt wurden, sind auch zur Herstellung der Polymere **P3** geeignet oder besonders geeignet. Speziell erwähnt werden soll N-(3-Trimethoxysilyl-propyl)-amino-bernsteinsäure-diethylester.

Als isocyanatfunktionelle Polyurethanpolymere zur Herstellung der Polymere **P3** geeignet sind die bereits beschriebenen isocyanatfunktionellen Polyurethanpolymere **P1,** erhältlich durch die Umsetzung von mindestens einem Polyisocyanat mit mindestens einem Polyol, wobei das Polyisocyanat so dosiert ist, dass dessen Isocyanatgruppen im Verhältnis zu den Hydroxylgruppen des Polyols im stöchiometrischen Überschuss vorhanden sind. Der Gehalt an freien Isocyanatgruppen im Polyurethanpolymer beträgt typischerweise 0.1 bis 5 Gewichts-%, bevorzugt 0.25 bis 2.5 Gewichts-%, besonders bevorzugt 0.3 bis 1 Gewichts-%, bezogen auf das gesamte Polymer. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind isocyanatfunktionelle Polyurethanpolymere mit dem genannten Gehalt an freien Isocyanatgruppen, welche aus der Umsetzung von Diisocyanaten mit hochmolekularen Diolen im NCO/OH-Verhältnis von 1.5 / 1 bis 2 / 1 erhalten werden.

Als Polyole für die Herstellung dieser isocyanatfunktionellen Polyurethanpolymere bevorzugt sind Polyoxyalkylendiole, insbesondere Polyoxypropylendiole. Speziell geeignet sind hochmolekulare Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 20'000 g/mol.

Eine feuchtigkeitshärtende Zusammensetzung enthaltend mindestens ein Silan (I) und mindestens ein silanfunktionelles Polyurethanpolymer **P3** kann auch in einem Einstufenverfahren hergestellt werden, das heisst, dass das Silan (I) und das silanfunktionelle Polyurethanpolymer **P3** nicht separat hergestellt und dann miteinander vermischt, sondern in einem Schritt gemeinsam hergestellt werden. Dabei wird so vorgegangen, dass ein isocyanatfunktionelles Polyurethanpolymer und ein Monoisocyanat oder Monoisothiocyanat der Formel (VI) gemischt werden und die Mischung stöchiometrisch mit einem Silan der Formel (V) umgesetzt wird.

In einer weiteren Ausführungsform ist das Polymer **P** ein silanfunktionelles Polymer **P4,** welches erhältlich ist durch die Umsetzung eines Hydroxylgruppen enthaltenden Polymers mit einem isocyanatfunktionellen Silan. Diese Umsetzung erfolgt im stöchiometrischen Verhältnis zwischen Isocyanatgruppen und Hydroxylgruppen, beispielsweise bei Temperaturen von 20 °C bis 100 °C, gegebenenfalls unter Mitverwendung von Katalysatoren.

Als isocyanatfunktionelle Silane geeignet sind Verbindungen der Formel (VIII), 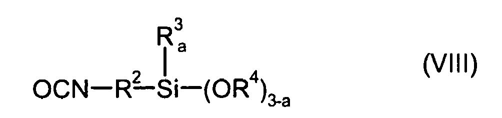 wobei R², R³, R⁴ und a dieselbe Bedeutung haben wie in Formel (I).

Beispiele für geeignete Isocyanatosilane sind 3-Isocyanatopropyl-trimethoxysilan, 3-Isocyanatopropyl-dimethoxymethylsilan, Isocyanatomethyltrimethoxysilan, Isocyanatomethyl-dimethoxymethylsilan, sowie deren Analoga mit Ethoxy- anstelle der Methoxygruppen am Silicium.

Als Hydroxylgruppen enthaltende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 20'000 g/mol.

Andererseits eignen sich auch Hydroxylgruppen enthaltende Polyurethanpolymere zur Umsetzung mit Isocyanatosilanen der Formel (VIII). Solche Hydroxylgruppen enthaltende Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3 / 1 bis 4 / 1, insbesondere von 1.8 / 1 bis 2.1 / 1. Gegebenenfalls kann das Polyurethanpolymer unter Mitverwendung von Weichmachern hergestellt werden, wobei die verwendeten Weichmacher keine gegenüber Isocyanaten reaktive Gruppen enthalten. Für diese Umsetzung geeignet sind dieselben Polyole und Polyisocyanate, die bereits als geeignet zur Herstellung eines isocyanatfunktionellen Polyurethanpolymers **P1** erwähnt wurden.

In einer weiteren Ausführungsform ist das Polymer **P** ein silanfunktionelles Polymer **P5,** welches durch Hydrosilylierung eines Polymers mit endständigen Doppelbindungen erhalten wird. Beispielsweise geeignet sind silanfunktionelle Polyisobutylenpolymere, welche durch Hydrosilylierung von Polyisobutylenpolymeren mit endständigen Doppelbindungen erhalten werden. Besonders geeignet sind silanfunktionelle Poly(meth)acrylatpolymere oder Polyetherpolymere, wie sie bei der Hydrosilylierung von Poly(meth)acrylatpolymeren oder Polyetherpolymeren mit endständigen Doppelbindungen, insbesondere von allylterminierten Polyoxyalkylenpolymeren, wie beispielsweise in US 3,971,751 und US 6,207,766 beschrieben, erhalten werden.

In der bevorzugten Ausführungsform ist das Polymer ein silanfunktionelles Polymer **P3** oder **P4** oder **P5.**

Die beschriebene feuchtigkeitshärtende Zusammensetzung kann zusätzlich zum silanfunktionellen Polymer **P** und dem Silan (I) weitere Komponenten enthalten, welche jedoch die Lagerstabilität der Zusammensetzung nicht beeinträchtigen, das heisst während der Lagerung die zur Vernetzung führende Reaktion der in der Zusammensetzung enthaltenen Silangruppen nicht in signifikantem Ausmass auslösen sollten. Insbesondere bedeutet dies, dass solche weiteren Komponenten kein oder höchstens Spuren von Wasser enthalten beziehungsweise freisetzen sollten. Als zusätzliche Komponenten können unter anderem die folgenden wohlbekannten Hilfs- und Zusatzmittel vorhanden sein:
Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, Polyole wie beispielsweise Polyoxyalkylenpolyole oder Polyesterpolyole, organische Phosphor- und Sulfonsäureester oder Polybutene; Lösemittel; anorganische und organische Füllstoffe, wie zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren, PVC-Pulver oder Hohlkugeln; Fasern, beispielsweise aus Polyethylen; Pigmente; Katalysatoren wie beispielsweise Organozinnverbindungen wie Dibutylzinndilaurat, Dibutylzinndiacetylacetonat, Bismut-organische Verbindungen oder Bismut-Komplexe, oder aminogruppenhaltige Verbindungen wie beispielsweise 1,4-Diazabicyclo[2.2.2]octan, 2,2'-Dimorpholinodiethylether oder Aminosilane; Rheologie-Modifizierer wie beispielsweise Verdickungsmittel, zum Beispiel Harnstoffverbindungen, Polyamidwachse, Bentonite oder pyrogene Kieselsäuren; Haftvermittler, wie beispielsweise Aminosilane oder Epoxysilane, insbesondere 3-Aminopropyltrimethoxysilan, 3-Aminopropyl-triethoxysilan, N-(2-Aminoethyl)-3-aminopropyltrimethoxysilan oder Bis-(3-(trimethoxysilyl)-propyl)amin, sowie oligomere Formen dieser Silane; Vernetzer, wie beispielsweise silan-funktionelle Oligo- und Polymere; Trocknungsmittel, wie zum Beispiel Vinyltrimethoxysilan oder andere schnell hydrolysierende Silane wie beispielsweise Organoalkoxysilane, welche in α-Stellung zur Silangruppe eine funktionelle Gruppe aufweisen wie zum Beispiel Aminomethyltrimethoxysilan, N-Phenyl-aminomethyl-trimethoxysilan, N-Cyclohexyl-aminomethyl-trimethoxysilan, (Methacryloxymethyl)-trimethoxysilan, N-(Trimethoxysilylmethyl)-O-methylcarbamat und N-(Dimethoxymethylsilylmethyl)-O-methylcarbamat, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Algizide; Fungizide oder das Pilzwachstum hemmende Substanzen; sowie weitere üblicherweise eingesetzte Substanzen.

Die beschriebene feuchtigkeitshärtende Zusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Bei der Applikation der beschriebenen feuchtigkeitshärtenden Zusammensetzung wird die Oberfläche mindestens eines beliebigen Festkörpers oder Artikels teilweise oder vollständig mit der Zusammensetzung kontaktiert. Bevorzugt ist eine gleichmässige Kontaktierung. Es kann durchaus vorkommen, dass der zu kontaktierende Festkörper oder Artikel vor dem Kontaktieren einer physikalischen und / oder chemischen Vorbehandlung unterzogen werden muss, beispielsweise durch Schleifen, Sandstrahlen, Bürsten oder dergleichen, oder durch Behandeln mit Reinigern, Lösemitteln, Haftvermittlern, Haftvermittlerlösungen oder Primern, oder dem Aufbringen einer Haftbrücke oder eines Sealers.

Bei der Applikation der beschriebenen feuchtigkeithärtenden Zusammensetzung auf mindestens einen Festkörper oder Artikel kommen die Silangruppen des Polymers **P** und die Silangruppen des Silans (I) in Kontakt mit Feuchtigkeit. Isocyanatgruppen reagieren mit Feuchtigkeit unter Abspaltung von Kohlendioxid zu Aminogruppen, welche schnell mit weiteren Isocyanatgruppen unter Ausbildung von Harnstoffgruppen weiterreagieren. Die Silangruppen haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen). Durch solche Reaktionen härtet die Zusammensetzung schliesslich zu einem elastischen Material aus; dieser Prozess wird auch als Vernetzung bezeichnet. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Die Aushärtung der Zusammensetzung erfolgt rasch und vollständig, unabhängig davon, ob das dafür benötigte Wasser aus der Luft stammt oder zugesetzt wird. Die in der praktischen Anwendung besonders wichtige Aushärtungsart über die Luftfeuchtigkeit erfolgt unter geeigneten klimatischen Bedingungen, beispielsweise bei 23 °C und 50% relativer Luftfeuchtigkeit, innerhalb von einigen Tagen vollständig.

Die feuchtigkeitshärtende Zusammensetzung ist beispielsweise verwendbar als Klebstoff, Dichtmasse oder Beschichtung. Geeignete Anwendungen sind beispielsweise das Verkleben von Bauteilen im Tief- oder Hochbau und bei der Fertigung oder Reparatur von industriellen Gütern oder Konsumgütern, insbesondere von Transportmitteln wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Tief- oder Hochbau; sowie das Beschichten von diversen Substraten, beispielsweise als Anstrich, Lack, Primer, Versiegelung oder Schutzbeschichtung, oder als Bodenbelag, beispielsweise für Büros, Wohnbereiche, Spitäler, Schulen, Lagerhallen und Parkgaragen.

Die feuchtigkeitshärtenden Zusammensetzungen, welche mindestens ein silanfunktionelles Polymer **P** enthalten, verfügen im ausgehärteten Zustand über sehr gute mechanische Eigenschaften. Diese sind deutlich besser als jene einer gleichartigen Zusammensetzung, welche kein Silan (I) enthält. Bessere mechanische Eigenschaften bedeuten im vorliegenden Fall eine erhöhte Dehnbarkeit ohne Einbusse bei der Reissfestigkeit. Oft wird sogar ebenfalls eine Erhöhung der Reissfestigkeit beobachtet. Die beobachtete Veränderung der mechanischen Eigenschaften ist in einer Vielzahl von Anwendungen, insbesondere jenen als elastischer Klebstoff, elastische Dichtmasse oder elastische Beschichtung, gleichbedeutend mit einer Verbesserung der Produktequalität.

Es wird vermutet, dass insbesondere zwei strukturelle Merkmale des Silans (I) für die beobachtete Verbesserung der mechanischen Eigenschaften der ausgehärteten Zusammensetzung verantwortlich sind. Zum einen enthält das Silan (I) neben den Silangruppen keine weiteren reaktiven Gruppen, welche während der Lagerung und/oder während der Aushärtung mit dem silanfunktionellen Polymer **P** reagieren könnten. Zum anderen enthält es eine Harnstoff- oder Thioharnstoff- oder Carbamat- oder Thiocarbamatgruppe. Vermutlich tragen diese strukturellen Merkmale dazu bei, dass das Silan (I), möglicherweise aufgrund einer günstigen Kinetik der Hydrolyse- und/oder der Kondensationsreaktion, und/oder einer besonderen chemischen Affinität zum silanfunktionellen Polymer **P**, bei der Aushärtung des silanfunktionellen Polymers P mit hoher Wirksamkeit in die Vernetzungsstellen des entstehenden ausgehärteten Polymers eingebunden wird. In der Folge weist dieses dadurch im Vergleich zum ausgehärteten Polymer aus einer analogen, aber kein Silan (I) enthaltenden Zusammensetzung eine geringere Vernetzungsdichte auf, was sich in einer verminderten Sprödigkeit und damit in einer erhöhten Dehnbarkeit und einer guten Reissfestigkeit ausdrückt. Es wird aber betont, dass es sich hierbei nur um Vermutungen handelt, welche die vorliegende Erfindung in keiner Weise einschränken sollen.

Beim Einsatz der beschriebenen feuchtigkeitshärtenden Zusammensetzung als Klebstoff, Dichtmasse oder Beschichtung sind grundsätzlich verschiedene Verfahren anwendbar.

Beispielsweise kann dies ein Verfahren der Verklebung von zwei Substraten **S1** und **S2** mit der Zusammensetzung sein, wobei die Substrate **S1** und **S2** aus verschiedenen oder gleichen Materialien bestehen können. Nach der Applikation der Zusammensetzung härtet diese durch Kontakt mit Feuchtigkeit aus. Es entsteht nach der Härtung ein verklebter Artikel. Ein derartiger Artikel kann ein Bauwerk, insbesondere ein Bauwerk des Tief- oder Hochbaus, oder ein Transportmittel sein. Bevorzugt ist der Artikel ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon. Beispielsweise können dies Teilkomponenten oder Module von Transportmitteln sein. Der Artikel kann jedoch auch ein Bauwerk oder ein Teil eines Bauwerkes sein.

Des weiteren kann dies ein Verfahren des Abdichtens sein, welches die folgenden Schritte umfasst: Applikation der Zusammensetzung zwischen die Oberflächen von zwei Substraten **S1** und **S2,** wobei die Substrate **S1** und **S2** aus verschiedenen oder gleichen Materialien bestehen, und Aushärtung der Zusammensetzung durch Kontakt mit Feuchtigkeit. Es entsteht nach der Härtung ein abgedichteter Artikel. Ein derartiger Artikel kann insbesondere ein Transportmittel oder ein Bauwerk sein. Insbesondere ist die Zusammensetzung als Dichtungsfugen von derartig abgedichteten Artikeln vorhanden.

Geeignete Substrate **S1** oder **S2** sind beispielsweise anorganische Substrate wie beispielsweise Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie beispielsweise pulverbeschichtete Metalle oder Legierungen; sowie Farben und Lacke, insbesondere Automobildecklacke.

### Beispiele

### Beschreibung der Prüfmethoden

Die Zugfestigkeit, die Bruchdehnung und das E-Modul bei 0-25% Dehnung wurde bestimmt nach DIN EN 53504 (Zuggeschwindigkeit: 200 mm/min) an während 7 Tagen bei 23 °C und 50% relativer Luftfeuchtigkeit ausgehärteten Filmen mit einer Schichtdicke von 2 mm.

Der Weiterreisswiderstand wurde gemessen nach DIN ISO 34-1 (Testgeschwindigkeit 500 mm/min) an während 7 Tagen bei 23 °C und 50% relativer Luftfeuchtigkeit ausgehärteten Filmen mit einer Schichtdicke von 2 mm.

Die Shore A-Härte wurde bestimmt nach DIN 53505.

Die Viskosität wurde auf einem thermostatisierten Kegel-Platten-Viskosimeter Haake VT-500 (Kegeldurchmesser 20 mm, Kegelwinkel 1°, Kegelspitze-Platten-Abstand 0.05 mm, Schergeschwindigkeit 10 bis 100 s⁻¹) gemessen.

| verwendete Abkürzungen in den Tabellen | |
|---|---|
| Ref. | Referenz |
| erf. | erfindungsgemäss |
| Vgl. | Vergleich |
| % | Gewichts-% |

### a) Herstellung von Silanen

### N-(3-Trimethoxysilyl-propyl)-amino-bernsteinsäure-diethylester

Zu 17.9 g (100 mmol) 3-Aminopropyl-trimethoxysilan (Silquest^{®} A-1110, GE Advanced Materials) wurden unter Feuchtigkeitsausschluss 17.2 g (100 mmol) Maleinsäure-diethylester unter gutem Rühren langsam zugetropft und anschliessend 2 Stunden weitergerührt. Es wurde eine farblose Flüssigkeit mit einer Viskosität bei 20 °C von 60 mPa·s erhalten.

### N-(3-Triethoxysilyl-propyl)-amino-bernsteinsäure-diethylester

Zu 22.1 g (100 mmol) 3-Aminopropyl-triethoxysilan (Silquest^{®} A-1100, GE Advanced Materials) wurden unter Feuchtigkeitsausschluss 17.2 g (100 mmol) Maleinsäure-diethylester unter gutem Rühren langsam zugetropft und anschliessend 2 Stunden weitergerührt. Es wurde eine farblose Flüssigkeit mit einer Viskosität bei 20 °C von 130 mPa·s erhalten.

### N-(3-Dimethoxymethylsilyl-propyl)-amino-bernsteinsäure-diethylester

Zu 16.3 g (100 mmol) 3-Aminopropyl-dimethoxymethylsilan (Silquest^{®} A-2110C, OSi-Crompton) wurden unter Feuchtigkeitsausschluss 17.2 g (100 mmol) Maleinsäure-diethylester unter gutem Rühren langsam zugetropft und anschliessend 2 Stunden weitergerührt. Es wurde eine farblose Flüssigkeit mit einer Viskosität bei 20 °C von 100 mPa·s erhalten.

### N-(4-Dimethoxymethylsilyl-2,2-dimethyl-butyl)-amino-bernsteinsäurediethylester

Zu 20.5 g (100 mmol) 4-Amino-3,3-dimethylbutyl-dimethoxymethylsilan (Silquest^{®} A-2639, GE Advanced Materials) wurden unter Feuchtigkeitsausschluss 17.2 g (100 mmol) Maleinsäure-diethylester unter gutem Rühren langsam zugetropft und anschliessend 2 Stunden weitergerührt. Es wurde eine farblose Flüssigkeit mit einer Viskosität bei 20 °C von 210 mPa·s erhalten.

### N-(3-Trimethoxysilyl-propyl)-3-amino-propionsäure-tetrahydrofurfurylester

Zu 17.9 g (100 mmol) 3-Aminopropyl-trimethoxysilan (Silquest^{®} A-1110, GE Advanced Materials) wurden unter Feuchtigkeitsausschluss 15.6 g (100 mmol) Tetrahydrofurfuryl-acrylat unter gutem Rühren langsam zugetropft und anschliessend 2 Stunden bei 60°C weitergerührt. Es wurde eine farblose Flüssigkeit mit einer Viskosität bei 20 °C von 270 mPa·s erhalten.

### N-(3-Trimethoxysilyl-propyl)-3-amino-propionitril

Zu 17.9 g (100 mmol) 3-Aminopropyl-trimethoxysilan (Silquest^{®} A-1110, GE Advanced Materials) wurden unter Feuchtigkeitsausschluss 5.3 g (100 mmol) Acrylnitril unter gutem Rühren langsam zugetropft und anschliessend 2 Stunden bei 60°C weitergerührt. Es wurde eine farblose Flüssigkeit mit einer Viskosität bei 20 °C von 220 mPa·s erhalten.

### N-(3-Trimethoxysilyl-propyl)-2-amino-ethylphosphonsäure-dimethylester

Zu 17.9 g (100 mmol) 3-Aminopropyl-trimethoxysilan (Silquest^{®} A-1110, GE Advanced Materials) wurden unter Feuchtigkeitsausschluss 13.6 g (100 mmol) frisch destillierter Vinylphosphonsäure-dimethylester (Siedepunkt circa 100°C bei 10mbar) unter gutem Rühren langsam zugetropft und anschliessend 2 Stunden bei 60°C weitergerührt. Es wurde eine farblose Flüssigkeit mit einer Viskosität bei 20 °C von 300 mPa·s erhalten.

### Beispiel 1: Sil-1

Zu 11.9 g (100 mmol) Phenylisocyanat wurden unter Feuchtigkeitsausschluss 35.1 g (100 mmol) N-(3-Trimethoxysilyl-propyl)-amino-bernsteinsäure-diethylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 3000 mPa·s erhalten.

### Beispiel 2: Sil-2

Zu 13.5 g (100 mmol) Phenylisothiocyanat wurden unter Feuchtigkeitsausschluss 35.1 g (100 mmol) N-(3-Trimethoxysilyl-propyl)-amino-bernsteinsäure-diethylester unter gutem Rühren bei 20-30 °C zugetropft und die Mischung solange gerührt, bis die NCS-Bande bei 2087 cm⁻¹ im FT-IR-Spektrum verschwunden war. Es wurde eine farblose Flüssigkeit mit einer Viskosität bei 20 °C von 600 mPa·s erhalten.

### Beispiel 3:Sil-3

Zu 12.5 g (100 mmol) Cyclohexylisocyanat wurden unter Feuchtigkeitsausschluss 35.1 g (100 mmol) N-(3-Trimethoxysilyl-propyl)-amino-bernsteinsäure-diethylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 2300 mPa·s erhalten.

### Beispiel 4: Sil-4

Zu 9.9 g (100 mmol) n-Butylisocyanat wurden unter Feuchtigkeitsausschluss 35.1 g (100 mmol) (3-Trimethoxysilyl-propylamino)-bernsteinsäurediethylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 600 mPa·s erhalten.

### Beispiel 5: Sil-5

Zu 11.9 g (100 mmol) Phenylisocyanat wurden unter Feuchtigkeitsausschluss 39.4 g (100 mmol) N-(3-Triethoxysilyl-propyl)-amino-bernsteinsäure-diethylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 600 mPa·s erhalten.

### Beispiel 6: Sil-6

Zu 11.9 g (100 mmol) Phenylisocyanat wurden unter Feuchtigkeitsausschluss 33.5 g (100 mmol) N-(3-Dimethoxymethylsilyl-propyl)-aminobernsteinsäure-diethylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 3500 mPa·s erhalten.

### Beispiel 7: Sil-7

Zu 11.9 g (100 mmol) Phenylisocyanat wurden unter Feuchtigkeitsausschluss 37.8 g (100 mmol) N-(4-Dimethoxymethylsilyl-2,2-dimethyl-butyl)-amino-bernsteinsäure-diethylester unter gutem Rühren bei 20-30 °C zugetropft und die Mischung solange gerührt, bis die NCO-Bande bei 2270 cm⁻¹ im FT-IR-Spektrum verschwunden war. Die erhaltene Flüssigkeit kristallisierte allmählich zu farblosen Kristallen mit einem Schmelzpunkt von 90-95 °C.

### Beispiel 8: Sil-8

Zu 9.9 g (100 mmol) Butylisocyanat wurden unter Feuchtigkeitsausschluss 33.5 g (100 mmol) N-(3-Dimethoxymethylsilyl-propyl)-aminobernsteinsäure-diethylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 300 mPa·s erhalten.

### Beispiel 9: Sil-9

Zu 11.9 g (100 mmol) Phenylisocyanat wurden unter Feuchtigkeitsausschluss 25.5 g (100 mmol) N-Phenyl-3-aminopropyl-trimethoxysilan (Silquest^{®} Y-9669, GE Advanced Materials) unter gutem Rühren bei 20-30 °C zugetropft, die Mischung langsam auf 70 °C aufgeheizt und solange gerührt, bis die NCO-Bande bei 2270 cm⁻¹ im FT-IR-Spektrum verschwunden war. Es wurde eine farblose Flüssigkeit mit einer Viskosität bei 20 °C von 2100 mPa·s erhalten.

### Beispiel 10: Sil-10

Zu 11.9 g (100 mmol) Phenylisocyanat wurden unter Feuchtigkeitsausschluss 26.1 g (100 mmol) N-Cyclohexyl-3-aminopropyl-trimethoxysilan (Geniosil^{®} GF92, Wacker) unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von ca. 250 Pa·s erhalten.

### Beispiel 11: Sil-11

Zu 11.9 g (100 mmol) Phenylisocyanat wurden unter Feuchtigkeitsausschluss 22.7 g (100 mmol) N-Phenyl-aminomethyl-trimethoxysilan (Geniosil^{®} XL 973, Wacker) unter gutem Rühren bei 20-30 °C zugetropft, die Mischung langsam auf 70 °C aufgeheizt und solange gerührt, bis die NCO-Bande bei 2270 cm⁻¹ im FT-IR-Spektrum verschwunden war. Es wurde eine farblose Flüssigkeit mit einer Viskosität bei 20 °C von ca. 400 mPa·s erhalten.

### Beispiel 12: Sil-12

Zu 11.9 g (100 mmol) Phenylisocyanat wurden unter Feuchtigkeitsausschluss 21.1 g (100 mmol) N-Phenyl-aminomethyl-dimethoxymethylsilan (Geniosil^{®} XL 972, Wacker) unter gutem Rühren bei 20-30 °C zugetropft, die Mischung langsam auf 70 °C aufgeheizt und solange gerührt, bis die NCO-Bande bei 2270 cm⁻¹ im FT-IR-Spektrum verschwunden war. Es wurde eine farblose Flüssigkeit mit einer Viskosität bei 20 °C von ca. 600 mPa·s erhalten.

### Beispiel 13: Sil-13

Zu 11.9 g (100 mmol) Phenylisocyanat wurden unter Feuchtigkeitsausschluss 27.5 g (100 mmol) N-Cyclohexyl-aminomethyl-triethoxysilan (Geniosil^{®} XL 926, Wacker) unter gutem Rühren bei 20-30 °C zugetropft und solange gerührt, bis die NCO-Bande bei 2270 cm⁻¹ im FT-IR-Spektrum verschwunden war. Es wurde eine farblose Flüssigkeit mit einer Viskosität bei 20 °C von ca. 1100 mPa·s erhalten.

### Beispiel 14: Sil-14

Zu 11.9 g (100 mmol) Phenylisocyanat wurden unter Feuchtigkeitsausschluss 24.5 g (100 mmol) N-Cyclohexyl-aminomethyl-diethoxymethylsilan (Geniosil^{®} XL 924, Wacker) unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 1000 mPa·s erhalten.

### Beispiel 15: Sil-15

Zu 9.9 g (100 mmol) Butylisocyanat wurden unter Feuchtigkeitsausschluss 33.5 g (100 mmol) N-(3-Trimethoxysilyl-propyl)-3-amino-propionsäure-tetrahydrofurfurylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 480 mPa·s erhalten.

### Beispiel 16: Sil-16

Zu 9.9 g (100 mmol) Butylisocyanat wurden unter Feuchtigkeitsausschluss 23.2 g (100 mmol) N-(3-Trimethoxysilyl-propyl)-3-amino-propionitril unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 600 mPa·s erhalten.

### Beispiel 17: Sil-17

Zu 9.9 g (100 mmol) Butylisocyanat wurden unter Feuchtigkeitsausschluss 31.5 g (100 mmol) N-(3-Trimethoxysilyl-propyl)-2-amino-ethylphosphonsäure-dimethylester unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 1200 mPa·s erhalten.

### Beispiel 18 (Vergleich): Sil-18

Zu 20.5 g (100 mmol) 3-Isocyanatopropyl-trimethoxysilan (Geniosil^{®} GF 40, Wacker) wurden unter Feuchtigkeitsausschluss 24.5 g (100 mmol) eines Adduktes aus Maleinsäure-diethylester und Butylamin unter gutem Rühren bei ca. 20-30°C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 1000 mPa·s erhalten.

Das Addukt aus Maleinsäure-diethylester und Butylamin wurde hergestellt, indem zu 7.3 g (100 mmol) Butylamin unter Feuchtigkeitausschluss 17.2 g (100 mmol) Maleinsäure-diethylester unter gutem Rühren bei ca. 20-30°C zugetropft und anschliessend 2 Stunden gerührt wurden. Es wurde eine farblose Flüssigkeit mit einer Viskosität bei 20 °C von 25 mPa·s erhalten.

### Beispiel 19 (Vergleich): Sil-19

Zu 9.9 g (100 mmol) Butylisocyanat wurden unter Feuchtigkeitsausschluss 17.9 g (100 mmol) 3-Aminopropyltrimethoxysilan (Silquest^{®} A-1110, GE Advanced Materials) unter gutem Rühren bei 20-30 °C zugetropft und die Mischung solange gerührt, bis die NCO-Bande bei 2270 cm⁻¹ im FT-IR-Spektrum verschwunden war. Es wurde eine farblose Flüssigkeit mit einer Viskosität bei 20 °C von 300 mPa·s erhalten.

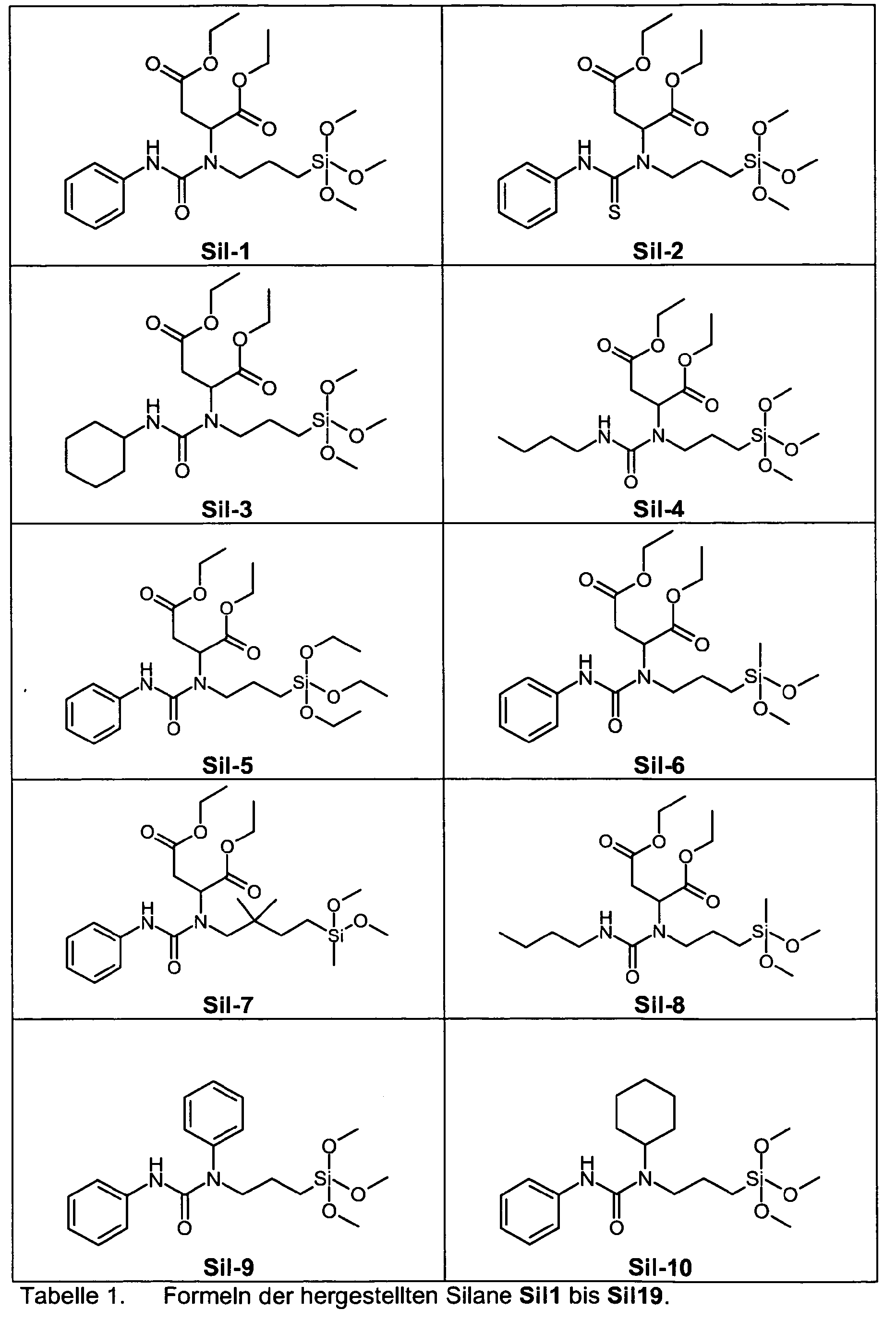

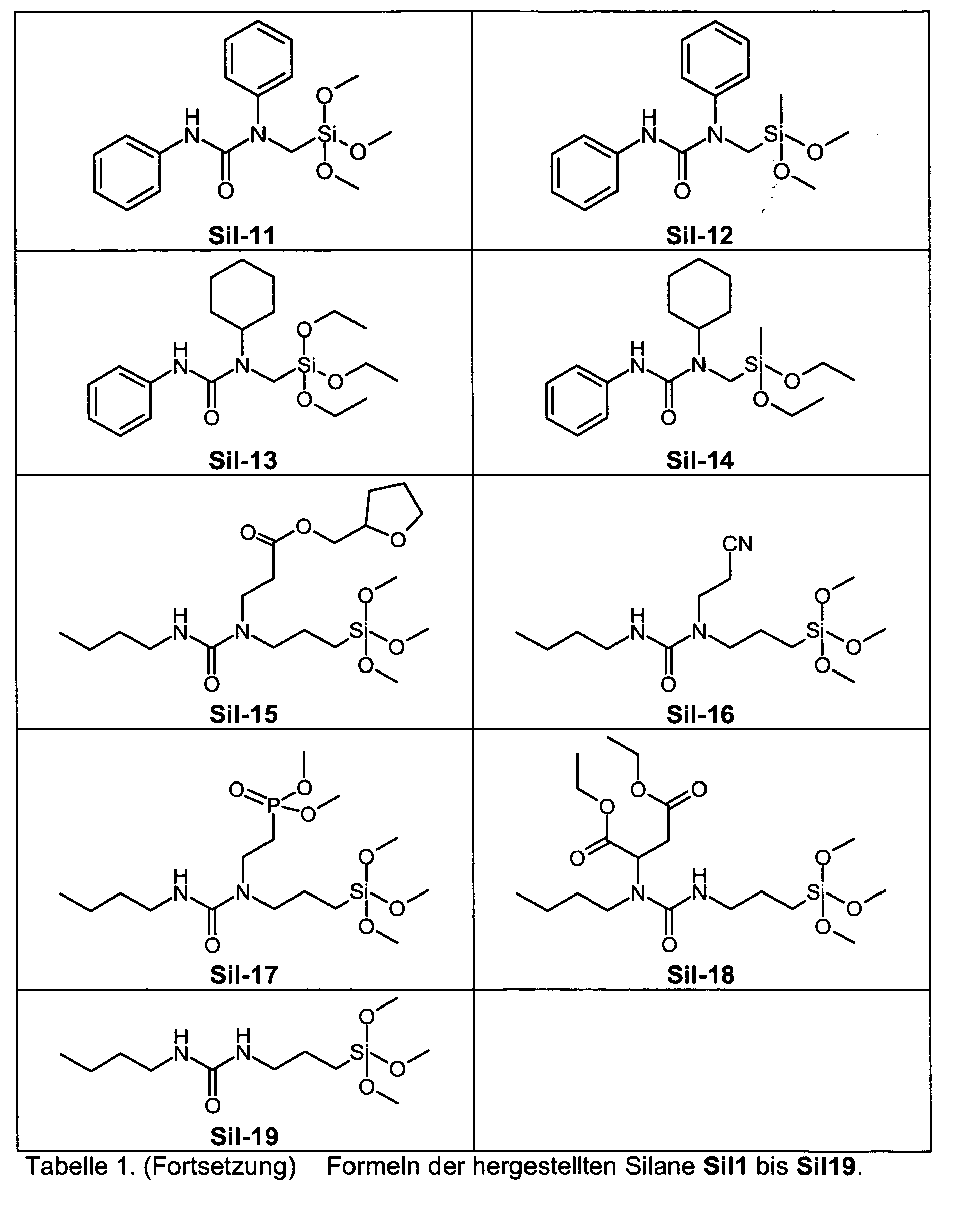

### b) Herstellung von silanfunktionellen Polymeren

### Polymer SP-1

Unter Feuchtigkeitsausschluss wurden 1000 g Polyol Acclaim^{®} 12200 (Bayer; low monol Polyoxypropylendiol, OH-Zahl 11.0 mg KOH/g, Wassergehalt ca. 0.02 Gewichts-%), 43.6 g Isophorondiisocyanat (IPDI; Vestanat^{®} IPDI, Degussa), 126.4 g Diisodecylphthalat (DIDP; Palatinol^{®} Z, BASF) und 0.12 g Di-n-butyl-zinndilaurat unter stetigem Rühren auf 90 °C aufgeheizt und auf dieser Temperatur belassen, bis der titrimetrisch bestimmte Gehalt an freien Isocyanatgruppen einen Wert von 0.63 Gewichts-% erreicht hatte. Anschliessend wurden 62.3 g N-(3-Trimethoxysilyl-propyl)-amino-bernsteinsäure-diethylester eingemischt und die Mischung bei 90 °C solange gerührt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

### Polymer SP-2

Unter Feuchtigkeitsausschluss wurden 1000 g Polyol Acclaim^{®} 12200 (Bayer; low monol Polyoxypropylendiol, OH-Zahl 11.0 mg KOH/g, Wassergehalt ca. 0.02 Gewichts-%) und 34.3 g 2,4-Toluylendiisocyanat bei 80 °C nach bekanntem Verfahren zu einem Polyurethanpolymer mit einem titrimetrisch bestimmten Gehalt an Isocyanatgruppen von 0.8 Gewichts-% umgesetzt. Anschliessend wurden bei 80 °C 69.2 g N-(3-Trimethoxysilyl-propyl)-aminobernsteinsäure-diethylester eingemischt und die Mischung bei 80 °C solange gerührt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

### Polymer SP-3

Unter Feuchtigkeitsausschluss wurden 1000 g Polyol Acclaim^{®} 12200 (Bayer; low monol Polyoxypropylendiol, OH-Zahl 11.0 mg KOH/g, Wassergehalt ca. 0.02 Gewichts-%) und 34.3 g 2,4-Toluylendiisocyanat bei 80 °C nach bekanntem Verfahren zu einem Polyurethanpolymer mit einem titrimetrisch bestimmten Gehalt an Isocyanatgruppen von 0.8 Gewichts-% umgesetzt. Anschliessend wurden bei 80 °C 77.5 g N-(3-Triethoxysilyl-propyl)-amino-bernsteinsäure-diethylester eingemischt und die Mischung bei 80 °C solange gerührt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

### Polymer SP-4

Unter Feuchtigkeitsausschluss wurden 1000 g Polyol Acclaim^{®} 12200 (Bayer; low monol Polyoxypropylendiol, OH-Zahl 11.0 mg KOH/g, Wassergehalt ca. 0.02 Gewichts-%) und 34.3 g 2,4-Toluylendiisocyanat bei 80 °C nach bekanntem Verfahren zu einem Polyurethanpolymer mit einem titrimetrisch bestimmten Gehalt an Isocyanatgruppen von 0.8 Gewichts-% umgesetzt. Anschliessend wurden bei 80 °C 66.0 g N-(3-Dimethoxymethylsilylpropyl)-amino-bernsteinsäure-diethylester eingemischt und die Mischung bei 80 °C solange gerührt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

### Polymer SP-5

Unter Feuchtigkeitsausschluss wurden 1000 g Polyol Acclaim^{®} 12200 (Bayer; low monol Polyoxypropylendiol, OH-Zahl 11.0 mg KOH/g, Wassergehalt ca. 0.02 Gewichts-%) und 34.3 g 2,4-Toluylendiisocyanat bei 80 °C nach bekanntem Verfahren zu einem Polyurethanpolymer mit einem titrimetrisch bestimmten Gehalt an Isocyanatgruppen von 0.8 Gewichts-% umgesetzt. Anschliessend wurden bei 80 °C 46.3 g N-(n-Butyl)-3-aminopropyltrimethoxysilan (Dynasylan^{®} 1189, Degussa) eingemischt und die Mischung bei 80 °C solange gerührt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

### Polymer SP-6

Unter Feuchtigkeitsausschluss wurden 1000 g Polyol Acclaim^{®} 12200 (Bayer; low monol Polyoxypropylendiol, OH-Zahl 11.0 mg KOH/g, Wassergehalt ca. 0.02 Gewichts-%) und 40.4 g 3-Isocyanatopropyl-trimethoxysilan (Geniosil^{®} GF 40, Wacker) nach bekanntem Verfahren bei 90 °C umgesetzt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

### Polymer SP-7

Silanfunktionelles Polyetherpolymer (MS-Polymer S203H von Kaneka).

### c) Herstellung von Zusammensetzungen

Die in der jeweiligen Tabelle angegebenen Mengen an silanfunktionellem Polymer, Zinnkatalysator, Aminkatalysator und Silan wurden unter Vakuum homogen vermischt und unter Ausschluss von Feuchtigkeit in eine Aluminiumtube abgefüllt. Mit jeder Zusammensetzung (Z) wurde anschliessend ein ausgehärteter Film mit einer Schichtdicke von 2 mm hergestellt.

### Beispiele Z1 bis Z5

Das Silan **Sil-1** wurde in verschiedenen Konzentrationen zum silanfunktionellen Polymer **SP-2** gegeben **(Z2** bis **Z5)** und mit der Referenz-Zusammensetzung **Z1,** welche kein zugesetztes Silan enthält, verglichen. Die Mengen und die Resultate sind in der Tabelle 2 angegeben.

**Tabelle 2 Eigenschaften der Zusammensetzungen mit Polymer SP-2. ^{a} Di-n-butylzinndilaurat. ^{b} α,ω-Polyoxypropylendiamin (Huntsman; Amin-Gehalt = 8.22 mmol NH₂/g)**

| | **Z1** Ref. | **Z2** erf. | **Z3** erf. | **Z4** erf. | **Z5** erf. |
|---|---|---|---|---|---|
| Polymer **SP-2** | 98.9% | 94.9% | 91.2% | 84.7% | 79.0% |
| DBTDL^{a} | 0.1% | 0.1% | 0.1% | 0.1% | 0.1% |
| Jeffamine^{®} D230^{b} | 1.0% | 1.0% | 1.0% | 1.0% | 1.0% |
| Silan **Sil-1** | --- | 4.0% | 7.7% | 14.2% | 19.9% |
| Zugfestigkeit [MPa] | 0.62 | 0.69 | 0.76 | 1.15 | 1.53 |
| Bruchdehnung [%] | 83 | 101 | 122 | 222 | 283 |
| E-Modul [MPa] | 1.10 | 1.11 | 1.11 | 1.17 | 1.23 |

**Z2** bis **Z5** zeigen mit ansteigender Menge **Sil-1** eine deutliche Erhöhung der Zugfestigkeit und insbesondere auch der Bruchdehnung gegenüber **Z1**.

### Beispiele Z6 bis Z20

In der Tabelle 3 sind Zusammensetzungen mit dem silanfunktionellen Polymer **SP-1** und verschiedenen zugesetzten erfindungsgemässen Silanen aufgeführt **(Z7** bis **Z21),** welche jeweils im Vergleich mit der Referenz-Zusammensetzung **Z6** ohne zugesetztes Silan eine deutliche Erhöhung der Bruchdehnung aufweisen.

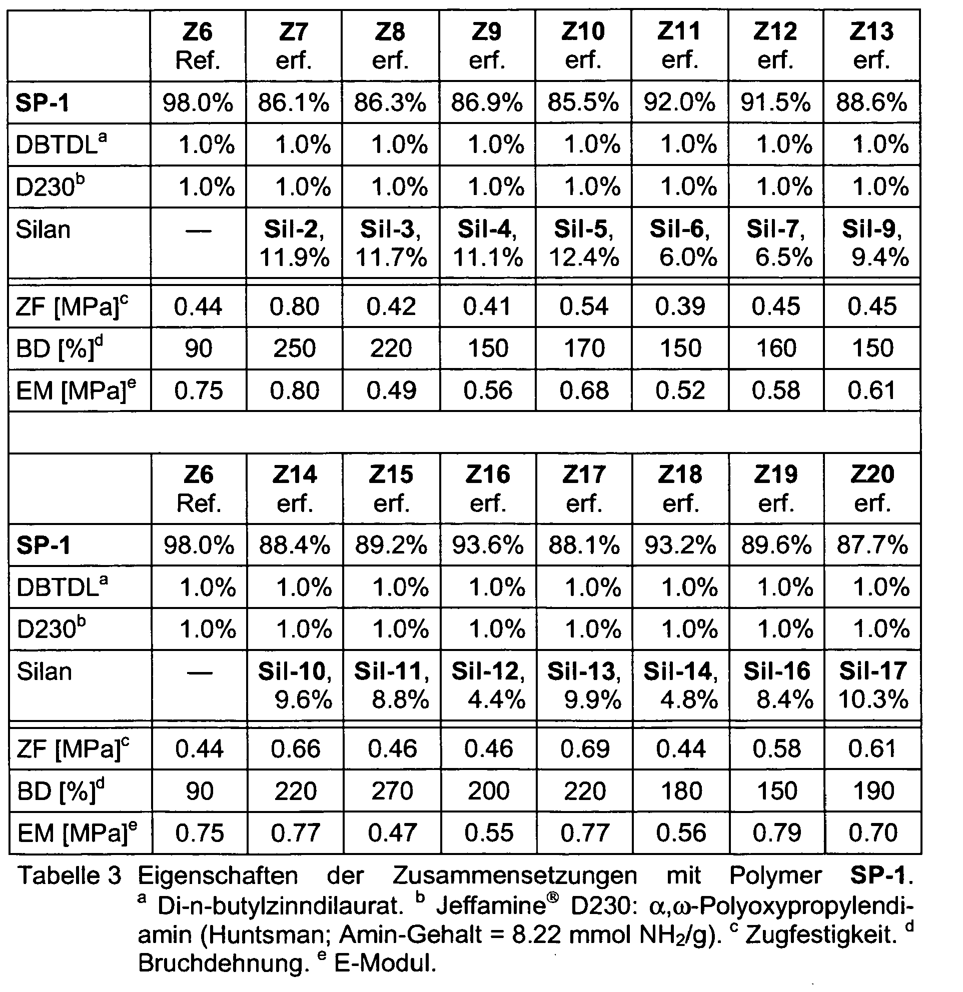

### Beispiele Z21 bis Z27 (Vergleiche)

Es wurden nicht erfindungsgemässe Silane anhand der Angaben in der Tabelle 4 (**Z21** bis **Z27**) zum silanfunktionellen Polymer **SP-1** gegeben. Im Vergleich mit der Referenz-Zusammensetzung **Z6** wurde entweder keine oder nur eine unwesetliche Erhöhung der Bruchdehnung beobachtet.

Interessant ist, dass die Silane **Sil-18** und **Sil-19,** welche beide keine erfindungsgemässen Silane nach Formel (I) sind, aber eine ähnliche Struktur aufweisen, keine deutlichere Zunahme der Dehnbarkeit bewirken. Vergleicht man beispielsweise die Erhöhung der Bruchdehnung hervorgerufen durch **Sil-4** (Beispiel **Z9** in Tabelle 3) mit der Erhöhung der Bruchdehnung hervorgerufen durch **Sil-18** (Beispiel **Z26** in Tabelle 4), so wird ersichtlich, dass das Silan nach Formel (I), also **Sil-4,** eine wesentlich stärkere Erhöhung der Bruchdehnung hervorruft als **Sil-18.**

**Tabelle 4. Eigenschaften der Vergleichszusammensetzungen mit Polymer SP-1. ^{a} Di-n-butylzinndilaurat. ^{b} Jeffamine^{®} D230: α,ω-Polyoxypropylendiamin (Huntsman; Amin-Gehalt = 8.22 mmol NH₂/g). Zugfestigkeit. ^{d} Bruchdehnung. ^{e} E-Modul. ^{f} N-Phenyl-3-aminopropyl-trimethoxysilan (Silquest^{®} Y-9669, GE Advanced Materials). ⁹ N-Cyclohexyl-3-aminopropyl-trimethoxysilan (Geniosil^{®} GF92, Wacker). ^{h} 3-Mercaptopropyl-trimethoxysilan (Silquest^{®} A-189, GE Advanced Materials). ⁱ (3-Trimethoxysilyl-propylamino)-bernsteinsäurediethylester. ^{k} 3-Aminopropyl-trimethoxysilan (Silquest^{®} A-1110, GE Advanced Materials).**

| | **Z6** Ref. | **Z21** Vgl. | **Z22** Vgl. | **Z23** Vgl. | **Z24** Vgl. | **Z25** Vgl. | **Z26** Vgl. | **Z27** Vgl. |
|---|---|---|---|---|---|---|---|---|
| **SP-1** | 98.0% | 91.4% | 91.2% | 92.8% | 89.1% | 93.2% | 86.9% | 90.8% |
| DBTDL^{a} | 1.0% | 1.0% | 1.0% | 1.0% | 1.0% | 1.0% | 1.0% | 1.0% |
| D230^{b} | 1.0% | 1.0% | 1.0% | 1.0% | 1.0% | 1.0% | 1.0% | 1.0% |
| Silan | - | Y-9669^{f}, 6.6% | GF-92^{g}, 6.8% | MTMO^{h}, 5.2% | BAMOⁱ, 8.9% | AMMO^{k}, 4.8% | **Sil-18** 11.1% | **Sil-19,** 7.2% |
| | | | | | | | | |
| ZF [MPa]^{c} | 0.44 | 0.43 | 0.41 | 0.46 | 0.39 | 0.51 | 0.44 | 0.56 |
| BD [%]^{d} | 90 | 110 | 100 | 90 | 100 | 85 | 120 | 95 |
| EM [MPa]^{e} | 0.75 | 0.65 | 0.65 | 0.79 | 0.62 | 0.92 | 0.65 | 0.93 |

### Beispiele Z28 bis Z34

Die silanfunktionellen Polymere **SP-3** und **SP-4** wurden anhand der Angaben der Tabelle 5 mit Silanen versetzt und mit der jeweiligen Referenz-Zusammensetzung ohne zugesetztes Silan verglichen.

**Tabelle 5. Eigenschaften von Zusammensetzungen mit Polymer SP-3 und SP-4. ^{a} α,ω-Polyoxyprpropylendiamin (Huntsman; Amin-Gehalt = 8.22 mmol NH₂/g). ^{b} Di-n-butyl-zinndiacetylacetonat. ^{c} Di-n-butylzinndilaurat. ^{d} Phenyltriethoxysilan. ^{e} Vinyltriethoxysilan (Geniosil^{®} GF 56, Wacker).**

| | **Z28** Ref. | **Z29** erf. | **Z30** Vgl. | **Z31** Vgl. | **Z32** Ref. | **Z33** erf. | **Z34** erf. |
|---|---|---|---|---|---|---|---|
| Polymer | **S P-3,** 98.0% | **SP-3,** 83.0% | **SP-3,** 90.3% | **SP-3,** 89.0% | **SP-4,** 98.8% | **SP-4,** 91.1% | **SP-4,** 91.4% |
| Katalysator | DBTAc^{b} 1.0% | DBTAc^{b} 1.0% | DBTAc^{b} 1.0% | DBTAc^{b} 1.0% | DBTDL^{c} 0.2% | DBTDL^{c} 0.2% | DBTDL^{c} 0.2% |
| Jeffamine^{®} D230^{a} | 1.0% | 1.0% | 1.0% | 1.0% | 1.0% | 1.0% | 1.0% |
| Silan | --- | **Sil-5**, 15.0% | PhTEO^{d} 7.7% | VTEO^{e}, 9.0% | --- | **Sil-1**, 7.7% | **Sil-6**, 7.4% |
| | | | | | | | |
| Zugfestigkeit [MPa] | 0.55 | 0.88 | 0.57 | 0.65 | 0.69 | 0.94 | 0.86 |
| Bruchdehnung [%] | 110 | 270 | 120 | 100 | 120 | 180 | 220 |
| E-Modul [MPa] | 0.82 | 1.16 | 1.01 | 1.08 | 1.00 | 1.09 | 0.91 |

Die erfindungsgemässen Zusammensetzungen **Z29** und **Z33** und **Z34** zeigen im Vergleich zu den jeweiligen Referenz-Zusammensetzungen **Z28** und **Z32** eine deutliche Erhöhung der Bruchdehnung, sowie eine Erhöhung der Zugfestigkeit. Die Vergleichs-Zusammensetzungen **Z30** und **Z31,** welche nichterfindungsgemässe Silane enthalten, zeigen hingegen keine oder nur eine unwesentliche Erhöhung der Bruchdehnung gegenüber der Referenz-Zusammensetzung **Z28.**

### Beispiele Z35 bis Z40

Die silanfunktionellen Polymere **SP-5, SP-6** und **SP-7** wurden anhand der Angaben der Tabelle 6 mit Silanen versetzt und mit der jeweiligen Referenz-Zusammensetzung ohne zugesetztes Silan verglichen.

**Tabelle 6. Eigenschaften von Zusammensetzungen mit Polymer SP-5, SP-6 oder SP-7. ^{a} α,ω-Polyoxypropylendiamin (Huntsman; Amin-Gehalt = 8.22 mmol NH₂/g). ^{b} Di-n-butylzinndilaurat. ^{c} Di-n-butyl-zinndiacetylacetonat.**

| | **Z35** Ref. | **Z36** erf. | **Z37** Ref. | **Z38** erf. | **Z39** Ref. | **Z40** erf. |
|---|---|---|---|---|---|---|
| Polymer | **SP-5,** 98.9% | **SP-5,** 84.4% | **SP-6,** 98.0% | **SP-6,** 90.2% | **SP-7,** 98.0% | **SP-7,** 92.2% |
| Katalysator | DBTDL^{b}, 0.1% | DBTDL^{b}, 0.1% | DBTDL^{b}, 1.0% | DBTDL^{b}, 1.0% | DBTAc^{c}, 1.0% | DBTAc^{c}, 1.0% |
| Jeffamine^{®} D230^{a} | 1.0% | 1.0% | 1.0% | 1.0% | 1.0% | 1.0% |
| Silan | --- | **Sil-1**, 14.5 % | --- | **Sil-6**, 7.8% | --- | **Sil-5**, 5.8% |
| | | | | | | |
| Zugfestigkeit [MPa] | 0.47 | 0.80 | 0.46 | 0.53 | 0.26 | 0.26 |
| Bruchdehnung [%] | 45 | 130 | 55 | 110 | 190 | 290 |
| E-Modul [MPa] | 1.30 | 1.17 | 1.07 | 0.84 | 0.29 | 0.24 |

Die Resultate der Tabelle 6 zeigen, dass sowohl die silanfunktionellen Polyurethanpolymere **SP-5** und **SP-6** als auch das silanfunktionelle Polyetherpolymer **SP-7** bei der Mitverwendung der in der Tabelle 6 angegebenen erfindungsgemässen Silane eine deutliche Erhöhung der Bruchdehung aufweisen.

### Beispiel Z41 bis Z52

Es wurde eine Dicht- / Klebstoff-Grundformulierung **(GF)** hergestellt, indem in einem Vakuummischer 3300 g silanfunktionelles Polymer **SP-1,** 1335 g Diisodecylphthalat (DIDP; Palatinol^{®} Z, BASF), 100 g Vinyltrimethoxysilan (Silquest^{®} A-171, GE Advanced Materials), 4400 g feinteilige beschichtete Kreide (Socal^{®} U1S2, Solvay; getrocknet), 300 g pyrogene Kieselsäure (Aerosil^{®} 200, Degussa; getrocknet), 100 g N-(2-Aminoethyl)-3-aminopropyltrimethoxysilan (Silquest^{®} A-1120, GE Advanced Materials) und 15 g Di-n-butyl-zinndilaurat zu einer homogenen Paste verarbeitet wurden, welche unter Ausschluss von Feuchtigkeit aufbewahrt wurde. Zu dieser Grundformulierung **GF** wurden in einem Vakuummischer die in der Tabelle 7 angegebenen Silane homogen eingemischt und diese Dicht- / Klebstoff-Zusammensetzungen unter Ausschluss von Feuchtigkeit aufbewahrt.

Beim der Referenz-Zusammensetzung **Z41** ohne Zusatz eines Silans (I) handelt es sich um eine Masse mit einer knapp befriedigenden Dehnbarkeit, bei gleichzeitig guter Zugfestigkeit und hohem Weiterreisswiderstand. Die erfindungsgemässen Zusammensetzungen **Z42** bis **Z51,** welche zusätzlich ein Silan (I) enthalten, weisen gegenüber **Z41** eine deutlich bis stark erhöhte Bruchdehnung auf, bei ebenfalls erhöhter Zugfestigkeit und teilweise stark erhöhtem Weiterreisswiderstand. Die beobachtete Veränderung der mechanischen Werte ist für viele Dicht- und Klebeanwendungen sehr erwünscht. Die Vergleichs-Zusammensetzung **Z52,** bei welcher ein nicht erfindungsgemässes Silan mitverwendet wurde, weist gegenüber der Referenz-Zusammensetzung **Z41** hingegen tiefere Werte für die Bruchdehnung, die Zugfestigkeit und den Weiterreisswiderstand auf.

**Tabelle 7. Eigenschaften von Klebstoff-/Dichtstoffzusammensetzungen. Diisodecylphthalat (Palatinol^{®} Z, BASF). ^{b} Vinyltrimethoxysilan (Silquest^{®} A-171, GE Advanced Materials).**

| | **Z41** Ref. | **Z42** erf. | **Z43** erf. | **Z44** erf. | **Z45** erf. | **Z46** erf. | **Z47** erf. | **Z48** erf. | **Z49** erf. | **Z50** erf. | **Z51** erf. | **Z52** Vgl. |
|---|---|---|---|---|---|---|---|---|---|---|---|---|
| Grundformulierung **GF** | 96.0% | 96.0% | 96.0% | 96.0% | 96.0% | 96.0% | 96.0% | 96.0% | 96.0% | 96.0% | 96.0% | 96.0% |
| DIDP^{a} | 4.0% | --- | --- | --- | 2.0% | 2.0% | --- | 2.0% | --- | --- | --- | --- |
| Silan | --- | **Sil-1**, 4.0% | **Sil-4**, 4.0% | **Sil-5**, 4.0% | **Sil-6**, 2.0% | **Sil-8**, 2.0% | **Sil-11**, 4.0% | **Sil-14**, 2.0% | **Sil-15**, 4.0% | **Sil-16**, 4.0% | **Sil-17**, 4.0% | VTMO^{b}, 4.0% |
| | | | | | | | | | | | | |
| Shore A | 49 | 51 | 52 | 51 | 49 | 48 | 37 | 41 | 57 | 57 | 58 | 60 |
| Zugfestigkeit [MPa] | 2.7 | 3.6 | 4.3 | 3.7 | 3.4 | 3.8 | 4.0 | 4.2 | 3.1 | 3.4 | 3.5 | 2.7 |
| Bruchdehnung [%] | 330 | 420 | 630 | 450 | 490 | 590 | 800 | 780 | 420 | 470 | 490 | 190 |
| E-Modul [MPa] | 2.1 | 2.5 | 2.0 | 2.3 | 1.9 | 1.7 | 1.6 | 1.5 | 2.0 | 2.3 | 2.3 | 3.2 |
| Weiterreiss-widerstand [N/mm] | 11.0 | 14.6 | 18.1 | 13.2 | 16.8 | 17.3 | 23.9 | 23.3 | 11.0 | 13.5 | 12.9 | 7.3 |

## Patentansprüche

1. Feuchtigkeitshärtende Zusammensetzung enthaltend mindestens ein Organoalkoxysilan der Formel (I)und mindestens ein silanfunktionelles Polymer **P** 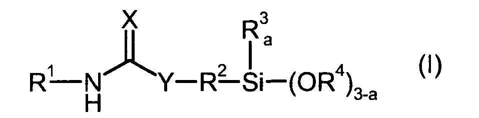 wobei
R¹ für eine Alkyl-, Cycloalkyl-, Aryl- oder Arylalkylgruppe steht und welche weder mit Wasser oder Silan reaktive Gruppen noch Aminogruppen noch polymerisierbare Doppelbindungen enthält;
R² für eine lineare oder verzweigte Alkylengruppe mit 1 bis 20 C-Atomen steht;
R³ für eine Alkylgruppe mit 1 bis 8 C-Atomen steht;
R⁴ für eine Alkylgruppe mit 1 bis 5 C-Atomen steht;
a für 0 oder 1 oder 2, bevorzugt für 0 oder 1, steht;
X für O oder S steht;
Y für O oder S oder N-R⁵ steht;
wobei
R⁵ für einen linearen oder verzweigten Kohlenwasserstoffrest mit 1 bis 20 C-Atomen steht, bevorzugt für Methyl oder Ethyl oder Butyl oder Cyclohexyl oder Phenyl oder einen Rest der Formel (III) steht: 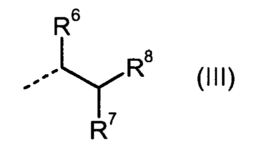
wobei
R⁶ und R⁷, unabhängig voneinander, für ein Wasserstoffatom oder für einen Rest aus der Gruppe umfassend R⁹, -COOR⁹ und -CN steht; und
R⁸ für ein Wasserstoffatom oder für einen Rest aus der Gruppe umfassend -CH₂-COOR⁹, -COOR⁹, -CN, -NO₂, -PO(OR⁹)₂, -SO₂R⁹ und -SO₂OR⁹ steht;
wobei
R⁹ für einen Kohlenwasserstoffrest mit 1 bis 20 C-Atomen steht.

2. Feuchtigkeitshärtende Zusammensetzung gemäss Anspruch 1, **dadurch gekennzeichnet, dass** R³ für eine Methyl- oder für eine Ethylgruppe, insbesondere eine Methylgruppe, steht.

3. Feuchtigkeitshärtende Zusammensetzung gemäss Anspruch 1 oder 2, **dadurch gekennzeichnet, dass** R⁴ für eine Methylgruppe oder für eine Ethylgruppe oder für eine Isopropylgruppe, insbesondere für eine Methylgruppe oder für eine Ethylgruppe, steht.

4. Feuchtigkeitshärtende Zusammensetzung gemäss einem der vorhergehenden Ansprüche, **dadurch gekennzeichnet, dass** in Formel (III) R⁶ für -COOR⁹, R⁷ für H, R⁸ für -COOR⁹ und R⁹ für eine Alkylgruppe mit 1 bis 8 C-Atomen steht.

5. Feuchtigkeitshärtende Zusammensetzung gemäss einem der vorhergehenden Ansprüche, **dadurch gekennzeichnet, dass** das Organoalkoxysilan die Formel (IV) aufweist, 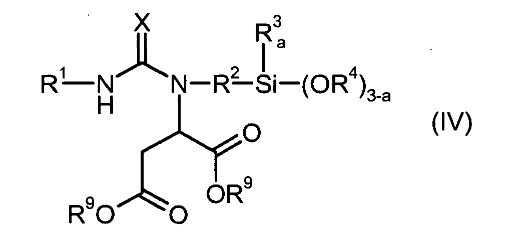 wobei
R¹ für Ethyl, Butyl, Cyclohexyl oder Phenyl steht;
R² für Methylen, Propylen, Butylen, Methylpropylen oder Dimethylbutylen steht; und
R⁹ für Methyl, Ethyl oder Butyl steht.

6. Feuchtigkeitshärtende Zusammensetzung gemäss einem der Ansprüche 1 bis 5, **dadurch gekennzeichnet**, das Polymer **P** ein silanfunktionelles Polymer **P3** ist, welches erhältlich ist durch die Umsetzung eines isocyanatfunktionellen Polyurethanpolymers mit einem Organoalkoxysilan, welches eine NCO-reaktive Gruppe aufweist.

7. Feuchtigkeitshärtende Zusammensetzung gemäss einem der Ansprüche 1 bis 5, **dadurch gekennzeichnet, dass** das Polymer **P** ein silanfunktionelles Polymer **P4** ist, welches erhältlich ist durch die Umsetzung eines Hydroxylgruppen enthaltenden Polymers mit einem isocyanatfunktionellen Organoalkoxysilan.

8. Feuchtigkeitshärtende Zusammensetzung gemäss einem der Ansprüche 1 bis 5, **dadurch gekennzeichnet, dass** das Polymer **P** ein silanfunktionelles Polymer **P5** ist, welches über eine Hydrosilylierungsreaktion eines Polymers mit endständigen Doppelbindungen erhältlich ist.

9. Feuchtigkeitshärtende Zusammensetzung gemäss Anspruch 6, **dadurch gekennzeichnet, dass** das Organoalkoxysilan, welches eine NCO-reaktive Gruppe aufweist, ein Aminosilan ist.

10. Feuchtigkeitshärtende Zusammensetzung gemäss Anspruch 9, **dadurch gekennzeichnet, dass** das Aminosilan die Formel (VII) aufweist, 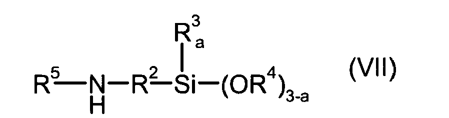 wobei
R² für eine lineare oder verzweigte Alkylengruppe mit 1 bis 20 C-Atomen steht;
R³ für eine Alkylgruppe mit 1 bis 8 C-Atomen steht;
R⁴ für eine Alkylgruppe mit 1 bis 5 C-Atomen steht;
R⁵ für Methyl oder Ethyl oder Butyl oder Cyclohexyl oder Phenyl oder einen Rest der Formel (III) steht 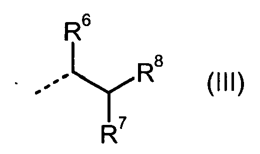 wobei
R⁶ und R⁷, unabhängig voneinander, für ein Wasserstoffatom oder für einen Rest aus der Gruppe umfassend R⁹, -COOR⁹ und -CN steht; und
R⁸ für ein Wasserstoffatom oder für einen Rest aus der Gruppe umfassend -CH₂-COOR⁹, -COOR⁹, -CN, -NO₂, -PO(OR⁹)₂, -SO₂R⁹ und -SO₂OR⁹ steht;
wobei
R⁹ für einen Kohlenwasserstoffrest mit 1 bis 20 C-Atomen steht;und a für 0 oder 1 oder 2, bevorzugt für 0 oder 1, steht.

11. Feuchtigkeitshärtende Zusammensetzung gemäss Anspruch 10, **dadurch gekennzeichnet, dass** im Aminosilan der Formel (VII) R³ für eine Methyl- oder für eine Ethylgruppe, insbesondere eine Methylgruppe, steht, und dass R⁴ für eine Methylgruppe oder für eine Ethylgruppe oder für eine Isopropylgruppe, insbesondere für eine Methylgruppe oder für eine Ethylgruppe, steht.

12. Feuchtigkeitshärtende Zusammensetzung gemäss Anspruch 10 oder 11, **dadurch gekennzeichnet, dass** in Formel (III) R⁶ für -COOR⁹, R⁷ für H, R⁸ für -COOR⁹ und R⁹ für eine Alkylgruppe mit 1 bis 8 C-Atomen steht.

13. Feuchtigkeitshärtende Zusammensetzung gemäss einem der vorhergehenden Ansprüche, **dadurch gekennzeichnet, dass**, **dadurch gekennzeichnet, dass** das Organoalkoxysilan in einer Menge von 0.5 - 40 Gewichts-%, bevorzugt 2 - 30 Gewichts-%, besonders bevorzugt 4 - 20 Gewichts-%, bezogen auf das Polymer **P**, vorhanden ist.

14. Verwendung einer feuchtigkeitshärtenden Zusammensetzung gemäss einem der Ansprüche 1 bis 13 als Klebstoff, Dichtmasse, Anstrich, Lack, Primer, Versiegelung, Schutzbeschichtung oder Bodenbelag.

15. Verwendung gemäss Anspruch 14 als Klebstoff oder Dichtmasse.

16. Verklebter Artikel, welcher durch das Verkleben von einem ersten Substrat **S1** und einem zweiten Substrat **S2** mit einer Zusammensetzung gemäss einem der Ansprüche 1 bis 13 verklebt wurde, wobei das Substrat **S1** und das Substrat **S2** aus verschiedenen oder gleichen Materialien bestehen.

17. Verklebter Artikel gemäss Anspruch 16, **dadurch gekennzeichnet, dass** der Artikel ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.

18. Abgedichteter Artikel, welcher durch Applikation einer Zusammensetzung gemäss einem der Ansprüche 1 bis 13 zwischen die Oberflächen von einem ersten Substrat **S1** und einem zweiten Substrat **S2** abgedichtet wurde, wobei das Substrat **S1** und das Substrat **S2** aus verschiedenen oder gleichen Materialien bestehen.

19. Abgedichteter Artikel gemäss Anspruch 18, **dadurch gekennzeichnet, dass** der Artikel ein Transportmittel oder ein Bauwerk ist.

## Claims

1. Moisture-curing composition containing at least one organoalkoxysilane of formula (I) and at least one silane-functional functional polymer **P**. 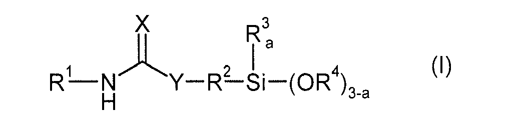 wherein
R¹ stands for a alkyl, cycloalkyl, aryl, or arylalkyl group and which does not contain any groups that react with water or silane or any amino groups or any polymerizable double bonds;
R² stands for a linear or branched alkylene group with 1 to 20 C atoms,
R³ stands for an alkyl group with 1 to 8 C atoms;
R⁴ stands for an alkyl group with 1 to 5 C atoms;
*a* stands for 0 or 1 or 2, preferably for 0 or 1;
X stands for O or S;
Y stands for O or S or N-R⁵;
wherein
R⁵ stands for a linear or branched hydrocarbon residue with 1 to 20 C atoms., preferably for methyl or ethyl or butyl or cyclohexyl or phenyl or a residue of formula (III): 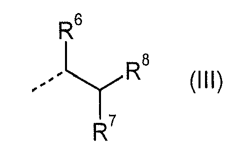
wherein
R⁶ and R⁷ each independently stand for a hydrogen atom or for a residue from the group including R⁹, -COOR⁹, and -CN; and
R⁸ stands for a hydrogen atom or a residue from the group including - CH₂-COOR⁹, -COOR⁹, -CN, -NO₂, -PO(OR⁹)₂, -SO₂R⁹, and -SO₂OR⁹;
wherein
R⁹ stands for a hydrocarbon residue with 1 to 20 C atoms.

2. Moisture-curing composition according to claim 1, **characterized in that** R³ stands for a methyl group or for an ethyl group, in particular for a methyl group.

3. Moisture-curing composition according to claim 1 or claim 2, **characterized in that** R⁴ stands for a methyl group or for an ethyl group or for an isopropyl group, in particular for a methyl group or for an ethyl group.

4. Moisture-curing composition according to anyone of the preceding claims, **characterized in that** in formula (III), R⁶ stands for -COOR⁹, R⁷ stands for H, R⁸ stands for -COOR⁹, and R⁹ stands for an optionally branched alkyl group with 1 to 8 C atoms.

5. Moisture-curing composition according to anyone of the preceding claims,
**characterized in that** the organoalkoxysilane has formula (IV), 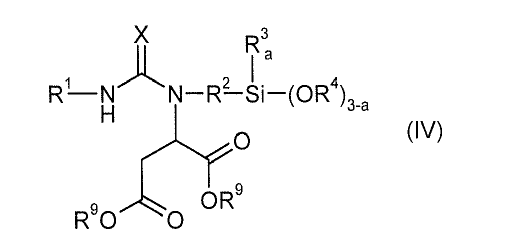 wherein
R¹ stands for ethyl, butyl, cyclohexyl, or phenyl;
R² stands for methylene, propylene, butylene, methylpropylene, or dimethylbutylene; and
R⁹ stands for methyl, ethyl, or butyl.

6. Moisture-curing composition according to anyone of the claims 1 to 5, **characterized in that** the polymer **P** is a silane-functional polymer **P3**, which can be obtained by reaction of an isocyanate-functional polyurethane polymer with an organoalkoxysilane having an NCO-reactive group.

7. Moisture-curing composition according to anyone of the claims 1 to 5, **characterized in that** the polymer **P** is a silane-functional polymer **P4**, which can be obtained by reaction of a hydroxyl group-containing polymer with an isocyanate-functional organoalkoxysilane.

8. Moisture-curing composition according to anyone of the claims 1 to 5, **characterized in that** the polymer **P** is a silane-functional polymer **P5**, which can be obtained by a hydrolysis reaction of a polymer with terminal double bonds.

9. Moisture-curing composition according to claim 6, **characterized in that** the organoalkoxysilane having an NCO-reactive group is an aminosilane.

10. Moisture-curing composition according to claim 9, **characterized in that** the aminosilane has formula (VII), 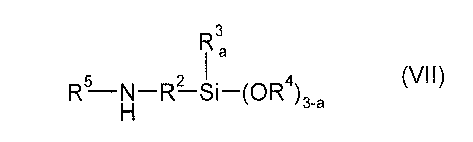 wherein
R² stands for a linear or branched alkylene group with 1 to 20 C atoms;
R³ stands for an alkyl group with 1 to 8 C atoms;
R⁴ stands for an alkyl group with 1 to 5 C atoms;
R⁵ stands for methyl or ethyl or butyl or cyclohexyl or phenyl or a residue of formula (III) 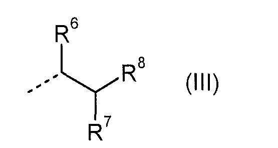 wherein
R⁶ and R⁷ each independently stand for a hydrogen atom or for a residue from the group including R⁹, -COOR⁹, and -CN, and
R⁸ stands for a hydrogen atom or for a residue from the group including - CH₂-COOR⁹, -COOR⁹, -CN, -NO₂, -PO(OR⁹)₂, -SO₂R⁹, and -SO₂OR⁹;
wherein
R⁹ stands for a hydrocarbon residue with 1 to 20 C atoms; and
*a* stands for 0 or 1 or 2, preferably for 0 or 1.

11. Moisture-curing composition according to claim 10, **characterized in that** in the aminosilane of formula (VII), R³ stands for a methyl group or for an ethyl group, in particular a methyl group, and that R⁴ stands for a methyl group or for an ethyl group or for an isopropyl group, in particular for a methyl group or for an ethyl group.

12. Moisture-curing composition according to claim 10 or 11, **characterized in that** in formula (III), R⁶ stands for -COOR⁹, R⁷ stands for H, R⁸ stands for -COOR⁹, and R⁹ stands for an optionally branched alkyl group with 1 to 8 C atoms.

13. Moisture-curing composition according to anyone of the preceding claims, **characterized in that** the organoalkoxysilane is present in an amount of 0.5-40 wt.%, preferably 2-30 wt.%, especially preferably 4-20 wt.% relative to the polymer **P**.

14. Use of a moisture-curing composition according to any one of the claims 1 to 13 as an adhesive, sealant, paint, lacquer, primer, seal, protective coating, or floor covering.

15. Use according to claim 14 as an adhesive or sealant.

16. Bonded article which was bonded by means of bonding a first substrate **S1** and a second substrate **S2** using a composition according to anyone of the claims 1 to 13, where substrate **S1** and substrate **S2** are made of different or identical materials.

17. Bonded article according to claim 16, **characterized in that** the article is a means of transport, in particular a water or land vehicle, preferably an automobile, a bus, a freight vehicle, a train, or a ship, or a portion thereof.

18. Sealed article which was sealed by application of a composition according to anyone of the claims 1 to 13 between the surfaces of a first substrate **S1** and a second substrate **S2,** where substrate **S1** and substrate **S2** are made of different or identical materials.

19. Sealed article according to claim 18, **characterized in that** the article is a means of transport or a structure.

## Revendications

1. Composition durcissant sous l'effet de l'humidité, contenant au moins un organoalcoxysilane de formule (I) et au moins un polymère à fonctionnalité silane **P** 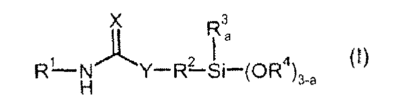 où
R¹ représente un groupe alkyle, cycloalkyle, aryle ou arylalkyle et qui ne contient pas de groupes réactifs avec l'eau ou le silane ni de groupes amino, ni de doubles liaisons polymérisables ;
R² représente un groupe alkylène linéaire ou ramifié comprenant 1 à 20 atomes de carbone ;
R³ représente un groupe alkyle comprenant 1 à 8 atomes de carbone ;
R⁴ représente un groupe alkyle comprenant 1 à 5 atomes de carbone ;
a vaut 0 ou 1 ou 2, de préférence 0 ou 1 ;
X représente O ou S ;
Y représente O ou S ou N-R⁵ ;
où
R⁵ représente un radical hydrocarboné linéaire ou ramifié, comprenant 1 à 20 atomes de carbone, de préférence méthyle ou éthyle ou butyle ou cyclohexyle ou phényle ou un radical de formule (III) 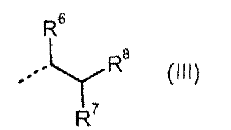
où
R⁶ et R⁷ représentent, indépendamment l'un de l'autre, un atome d'hydrogène ou un radical du groupe comprenant R⁹, -COOR⁹ et -CN ; et R⁸ représente un atome d'hydrogène ou un radical du groupe comprenant -CH₂-COOR⁹, -COOR⁹, -CN, -NO₂, -PO(OR⁹)₂, -SO₂R⁹ et -SO₂OR⁹ ;
où
R⁹ représente un radical hydrocarboné comprenant 1 à 20 atomes de carbone.

2. Composition durcissant sous l'effet de l'humidité selon la revendication 1, **caractérisée en ce que** R³ représente un groupe méthyle ou éthyle, en particulier un groupe méthyle.

3. Composition durcissant sous l'effet de l'humidité selon la revendication 1 ou 2, **caractérisée en ce que** R⁴ représente un groupe méthyle ou éthyle ou isopropyle, en particulier un groupe méthyle ou éthyle.

4. Composition durcissant sous l'effet de l'humidité selon l'une quelconque des revendications précédentes, **caractérisée en ce que** dans la formule (III) R⁶ représente -COOR⁹, R⁷ représente H, R⁸ représente -COOR⁹ et R⁹ représente un groupe alkyle comprenant 1 à 8 atomes de carbone.

5. Composition durcissant sous l'effet de l'humidité selon l'une quelconque des revendications précédentes, **caractérisée en ce que** l'organoalcoxysilane présente la formule (IV) 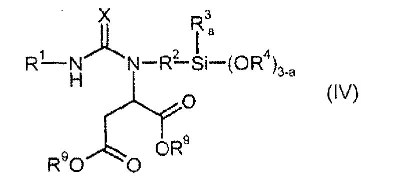 où
R¹ représente éthyle, butyle, cyclohexyle ou phényle ;
R² représente méthylène, propylène, butylène, méthylpropylène ou diméthylbutylène ; et
R⁹ représente méthyle, éthyle ou butyle.

6. Composition durcissant sous l'effet de l'humidité selon l'une quelconque des revendications 1 à 5, **caractérisée en ce que** le polymère **P** est un polymère à fonctionnalité silane **P3,** qui peut être obtenu par transformation d'un polymère de polyuréthane à fonctionnalité isocyanate avec un organoalcoxysilane, qui présente un groupe réactif avec NCO.

7. Composition durcissant sous l'effet de l'humidité selon l'une quelconque des revendications 1 à 5, **caractérisée en ce que** le polymère **P** est un polymère à fonctionnalité silane **P4,** qui peut être obtenu par transformation d'un polymère contenant des groupes hydroxyle avec un organoalcoxysilane à fonctionnalité isocyanate.

8. Composition durcissant sous l'effet de l'humidité selon l'une quelconque des revendications 1 à 5, **caractérisée en ce que** le polymère **P** est un polymère à fonctionnalité silane **P5,** qui peut être obtenu via une réaction d'hydrosilylation d'un polymère avec des doubles liaisons terminales.

9. Composition durcissant sous l'effet de l'humidité selon la revendication 6, **caractérisée en ce que** l'organoalcoxysilane, qui présente un groupe réactif avec NCO, est un aminosilane.

10. Composition durcissant sous l'effet de l'humidité selon la revendication 9, **caractérisée en ce que** l'aminosilane présente la formule (VII), 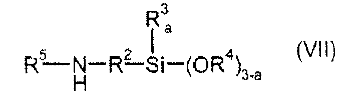 où
R² représente un groupe alkylène linéaire ou ramifié comprenant 1 à 20 atomes de carbone ;
R³ représente un groupe alkyle comprenant 1 à 8 atomes de carbone ;
R⁴ représente un groupe alkyle comprenant 1 à 5 atomes de carbone ;
R⁵ représente méthyle ou éthyle ou butyle ou cyclohexyle ou phényle ou un radical de formule (III) 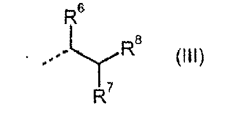 où
R⁶ et R⁷, représentent, indépendamment l'un de l'autre, un atome d'hydrogène ou un radical du groupe comprenant R⁹, -COOR⁹ et -CN ; et R⁸ représente un atome d'hydrogène ou un radical du groupe comprenant -CH₂-COOR⁹, -COOR⁹, -CN, -NO₂, -PO(OR⁹)₂, -SO₂R⁹ et -S0₂OR⁹ ;
où
R⁹ représente un radical hydrocarboné comprenant 1 à 20 atomes de carbone ; et
a vaut 0 ou 1 ou 2, de préférence 0 ou 1.

11. Composition durcissant sous l'effet de l'humidité selon la revendication 10, **caractérisée en ce que** dans l'aminosilane de formule (VII), R³ représente un groupe méthyle ou un groupe éthyle, en particulier un groupe méthyle et **en ce que** R⁴ représente un groupe méthyle ou éthyle ou isopropyle, en particulier un groupe méthyle ou éthyle.

12. Composition durcissant sous l'effet de l'humidité selon la revendication 10 ou 11, **caractérisée en ce que** dans la formule (III) R⁶ représente -COOR⁹, R⁷ représente H, R⁸ représente -COOR⁹ et R⁹ représente un groupe alkyle comprenant 1 à 8 atomes de carbone.

13. Composition durcissant sous l'effet de l'humidité selon l'une quelconque des revendications précédentes, **caractérisée en ce que** l'organoalcoxysilane est présent en une quantité de 0,5-40% en poids, de préférence de 2-30% en poids, de manière particulièrement préférée de 4-20% en poids, par rapport au polymère **P.**

14. Utilisation d'une composition durcissant sous l'effet de l'humidité selon l'une quelconque des revendications 1 à 13 comme adhésif, masse d'étanchéité, enduit, laque, apprêt, vitrification, revêtement de protection ou revêtement de sol.

15. Utilisation selon la revendication 14 comme adhésif ou masse d'étanchéité.

16. Objet collé qui est collé par le collage d'un premier substrat **S1** et d'un deuxième substrat **S2** avec une composition selon l'une quelconque des revendications 1 à 13, où le substrat **S1** et le substrat **S2** sont constitués par des matériaux identiques ou différents.

17. Objet collé selon la revendication 16, **caractérisé en ce que** l'objet est un moyen de transport, en particulier un véhicule aquatique ou terrestre, de préférence une voiture, un bus, un camion, un train ou un bateau ou une partie de ceux-ci.

18. Objet étanchéifié, qui est étanchéifié par application d'une composition selon l'une quelconque des revendications 1 à 13 entre les surfaces d'un premier substrat **S1** et d'un deuxième substrat **S2,** où le substrat **S1** et le substrat **S2** sont constitués par des matériaux identiques ou différents.

19. Objet étanchéifié selon la revendication 18, **caractérisé en ce que** l'objet est un moyen de transport ou une construction.
